(19) Europäisches Patentamt
European Patent Office
Office européen des brevets

(11) EP 3 083 753 B1

(12) **EUROPEAN PATENT SPECIFICATION**

(45) Date of publication and mention of the grant of the patent:
**20.09.2017 Bulletin 2017/38**

(21) Application number: **14825292.7**

(22) Date of filing: **17.12.2014**

(51) Int Cl.:
***C08G 63/676*** *(2006.01)* ***C08L 67/06*** *(2006.01)*
***C08G 63/52*** *(2006.01)*

(86) International application number:
**PCT/EP2014/078208**

(87) International publication number:
**WO 2015/091640 (25.06.2015 Gazette 2015/25)**

(54) **POLYESTER HYDROGELS**

POLYESTERHYDROGELE

HYDROGELS DE POLYESTER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2013 EP 13198669**

(43) Date of publication of application:
**26.10.2016 Bulletin 2016/43**

(73) Proprietor: **BASF SE**
**67056 Ludwigshafen am Rhein (DE)**

(72) Inventors:
- **YAMAMOTO, Motonori**
  **68199 Mannheim (DE)**
- **WISSEMEIER, Alexander**
  **67346 Speyer (DE)**
- **WEIGELT, Wolfgang**
  **67373 Dudenhofen (DE)**
- **KELLER, Harald**
  **67069 Ludwigshafen (DE)**
- **SEUFERT, Michael**
  **67098 Bad Dürkheim (DE)**
- **FERNANDEZ RAMIREZ, Gimmy Alex**
  **67071 Ludwigshafen (DE)**
- **SANZ-GOMEZ, Jorge**
  **69120 Heidelberg (DE)**
- **WIEDEMANN, Alexandra**
  **67273 Weisenheim am Berg (DE)**

(74) Representative: **BASF IP Association**
**BASF SE**
**G-FLP-C006**
**67056 Ludwigshafen (DE)**

(56) References cited:
**WO-A1-96/15174 WO-A1-97/20899**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 083 753 B1

## Description

### Field of the invention

The present invention relates to a polyester comprising units derived from monomers A, B and C, wherein the group of monomers A consists of (a1) monomers A1, or (a2) monomers A1 and monomers A2, with monomers A1 and monomers A2 being present in a molar ratio of at least 31:69, preferably at least 4:1, wherein the monomers A1 are selected from the group consisting of aromatic sulfonated dicarboxylic acid based monomers of general formulae (I), (II), (III) and (IV), and wherein the monomers A2 are selected from the group consisting of non-sulfonated aromatic dicarboxylic acid based monomers of general formulae (V), (VI) and (VII); and wherein the group of monomers B consists of (b1) monomers B1, or (b2) monomers B1 and monomers B2, with monomers B1 and monomers B2 being present in a molar ratio of at least 1:9, preferably at least 4:1, wherein the monomers B1 are selected from the group consisting of unsaturated dicarboxylic acid based monomers of general formula (VIII), and wherein the monomers B2 are selected from the group consisting of saturated dicarboxylic acid based monomers of general formula (IX); and wherein the group of monomers C consists of (c1) monomers C1, (c2) monomers C2, or (c3) monomers C1 and C2, wherein the monomers C1 are selected from the group consisting of ethylene glycol based monomers of general formula (X), and wherein the monomers C2 are selected from the group consisting of propylene glycol based monomers of general formula (XI), and wherein the molar ratio of the units derived from the group of monomers A to the units derived from the group of monomers B is from 9:1 to 1:2.4, and wherein the molar ratio of the units derived from the groups of monomers A and B to the units derived from the group of monomers C is from 1.3:1 to 1:1.3. The polyester of the invention is preferably cross-linked. In another embodiment, the polyester of the invention is preferably not cross-linked. The present invention further relates to a composition comprising as compounds the cross-linked polyester of the invention and saw dust; to an absorbent material comprising the cross-linked polyester or the composition of the invention; and to a soil treatment product comprising the cross-linked polyester or the composition of the present invention, and at least one additional compound selected from the group consisting of fillers, nutrients, fertilizers, pesticides and combinations thereof. Furthermore, the present invention relates to the use of the cross-linked polyester or the composition of the invention for agricultural applications.

### Background of the invention

Hydrogels are formed from superabsorbent polymers which can absorb and retain extremely large amounts of a liquid relative to their own mass. Such superabsorbent polymers are often also referred to as swellable polymers, hydrogel forming polymers, water absorbing polymers, gelforming polymers, and the like. Sometimes also the superabsorbent polymer in the dry form is referred to as hydrogel. In the context of the present invention, the term "hydrogel" will be used only in the context of the wetted state of a superabsorbent polymer, however, because in the dry state, the superabsorbent polymer is typically not present in the form of a gel, but in the form of a powder or a granulate having good flow properties.
An overview over superabsorbent polymers, their properties and methods of manufacturing them is provided by Frederic L. Buchholz and Andrew T. Graham in "Modern Superabsobent Polymer Technology", J. Wiley & Sons, New York, USA / Wiley VCH, Weinheim, Germany, 1997, ISBN 0-471-19411-5.
Superabsorbent polymers and compositions comprising superabsorbent polymers have become an important material for agricultural applications due to their capacity of absorbing large quantities of water. By using the superabsorbent polymers and superabsorbent compositions for soil treatment, the physiological properties of soils can be improved by increasing their capacity to hold water, reducing erosion and runoff, reducing the frequency of irrigation, increasing the efficiency of the water being used, increasing soil permeability and infiltration, reducing the tendency of the soil to get compacted, and helping plant performance.
Most of the superabsorbent polymers used today are cross-linked synthetic polymers. They include, for example, polymers and copolymers based on acrylamide, which are not based on renewable raw materials and which are insufficiently biodegradable.
For many applications, and in particular for agricultural applications, the biodegradation of the superabsorbent polymers is a preferred or required design variable to be addressed, however. In this context, polyester-based superabsorbent polymers are considered highly attractive not only because of their biodegradability, but also because of the large availability of the monomers, which may inter alia be, for example, polyethylene glycol and maleic anhydride.
Polyesters are typically formed by reacting dicarboxylic acid based monomers with diol monomers. As superabsorbent polymers, cross-linked polyesters obtainable from unsaturated polyesters are particularly preferred. Said unsaturated polyesters are typically based on unsaturated dicarboxylic acid based monomers and diol monomers. Unsaturated dicarboxylic acid based monomers such as maleic anhydride are particularly useful for the preparation of polyester-based superabsorbent polymers because the double bonds contained therein can easily be cross-linked, in

order to obtain a three-dimensional network of polyester chains, which exhibits a good swellability.

In this context, Temenoff et al. describe oligo(polyethylene glycol)fumarate hydrogels for cartilage tissue engineering (Temenoff et al., OPF Hydrogel Material Properties 2002, 429-437)

Furthermore, Tong et al. describe an unsaturated polyester based on poly(ethylene glycol), which is prepared by one-stage melt condensation of maleic anhydride, phthalic anhydride, propylene glycol, and poly (ethylene glycol)s (Tong et al., Polymer Engineering and Science 1985, 25, 54-56).

Moreover, WO 2008/008288 A2 discloses charged oligo(poly(ethylene glycol)fumarate) hydrogels in the context of a biodegradable material for improving the regeneration of nerve cells.

It is however not described in these prior art references that such polyesters may be used for agricultural applications, e.g. for soil treatment.

It should further be noted that cross-linked polyesters comprising dicarboxylic acid units, which are exclusively derived from unsaturated dicarboxylic acid based monomers, often exhibit a rather high stickiness, so that these polyesters cannot be provided in the form of a granulate or powder having good flow properties, which would be advantageous e.g. for agricultural applications, however.

Furthermore, it should be emphasized that unsaturated polyesters are typically cross-linked via all double bonds, which are present in the units forming the polyester chain, so that a high cross-link density will be obtained, if the amount of unsaturated dicarboxylic acid units is high. A high cross-link density is, however, typically disadvantageous for the swellability properties of the cross-linked polyester.

Accordingly, it is rather desired to obtain a medium or low cross-link density, in order to achieve a high water absorption capacity. On the other hand, it has to be ensured that cross-linking of the unsaturated polyester chains directly with each other, i.e. without the addition of an unsaturated monomer, is still possible at all.

It is therefore desired to find unsaturated polyesters, which can be cross-linked with a lower cross-link density to form superabsorbent polymers, which have improved swellability properties. At the same time, it is desired that these unsaturated polyesters and the cross-linked polyesters obtainable thereof are not sticky and exhibit a good flowability of the particles and that they are biodegradable.

This may e.g. be achieved by modifying the units the polyester comprises.

With regard to unsaturated polyesters derived from more than two types of units, EP 0 558 788 A1 discloses unsaturated polyester resins comprising apart from units derived from unsaturated dicarboxylic acid based monomers or units derived from diol monomers, units derived from dimethylolpropionic acid and units derived from an aromatic sulfonated dicarboxylic acid. Said unsaturated polyester resins are described as suitable for preparing water-based paints by adding a water-compatible acrylic and/or vinylic monomer being polymerisable with the resin. Accordingly, it is suggested to react the unsaturated polyesters with acrylic and/or vinylic monomers in the paints.

Furthermore, WO 2006/078456 A2 discloses unsaturated polyester resins formed from at least one discarboxylic acid containing ethylenic unsaturation, its corresponding anhydride, or mixtures thereof, with at least one saturated monohydric alcohol, which are further reacted with at least one saturated monohydric alcohol. Said unsaturated polyester resins may further comprise units derived from an acid selected from the group consisting of phthalic acid, isophthalic acid, terephthalic acid and the like, in addition to the units derived from the unsaturated dicarboxylic acid or the comprising anhydride. The unsaturated polyester resins are described to be more soluble in styrene than other resins. Thus, it is suggested to react the unsaturated polyester resins with styrene monomers for cross-linking purposes.

EP 0 792 310 B1 discloses a biodegradable polyether ester obtainable by reacting a mixture essentially comprising (a1) adipic acid or ester forming derivatives thereof, terephthalic acid or ester forming derivatives thereof and a compound containing sulfonate groups, and (a2) a mixture of dihydroxy compounds comprising (a21) a dihydroxy compound and (a22) a dihydroxy compound comprising ether functionalities. An unsaturated dicarboxylic acid or derivative thereof is not used in the preparation of these polyether esters. Thus, the polyether esters are saturated polyether esters, which cannot be cross-linked via double bonds contained in the polyester chains. WO 97/20899 A1 discloses in a polyester made from diethylene glycol (C), trans-stilbenedicarboxylic acid (B) and sodium dimethylisoterephthalic acid (A). The ratio A:B is 1:2, A+B:C is 1:3.

It should be emphasized that none of the described polyesters are supposed to be cross-linked by directly cross-linking the polyester chains with each other, i.e. without adding an unsaturated monomer such as styrene.

Furthermore, none of the above documents disclose that the polyesters would be suitable for agricultural applications. Accordingly, the water absorption capacity is also not mentioned. Further, flowability properties are not discussed.

Thus, there remains a need for unsaturated polyesters, which can be cross-linked by directly cross-linking the polyester chains with each other, in order to obtain cross-linked polyesters, which exhibit a high water absorption capacity, a low stickiness, and good flowability properties, if provided e.g. in granular form.

It is an object of the present invention to provide such polyesters as well as the respective cross-linked polyesters obtainable thereof.

Furthermore, it is an object of the present invention to provide a composition comprising a polyester, which not

only exhibits a high water absorption capacity, but also good flowability properties. In this context, it is particularly desired that the composition comprises a further component, which can improve the water absorption capacity and the flowability of the polyester alone, and which is inexpensively available.

Furthermore, it is an object of the present invention to provide an absorbent material and a soil treatment product, which exhibit a high water absorption capacity.

**Summary of the invention**

The above mentioned objects are achieved by providing a polyester comprising units derived from groups of monomers A, B and C, wherein

(a) the group of monomers A consists of

(a1) monomers A1, or
(a2) monomers A1 and monomers A2, with monomers A1 and monomers A2 being present in a molar ratio of at least 31:69, preferably at least 4:1,

wherein the monomers A1 are selected from the group consisting of aromatic sulfonated dicarboxylic acid based monomers of the following general formulae (I), (II), (III) and (IV)

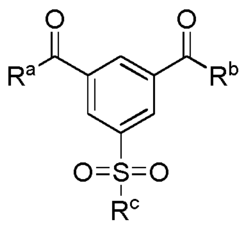
I
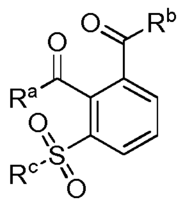
II
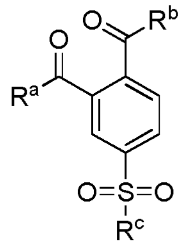
III
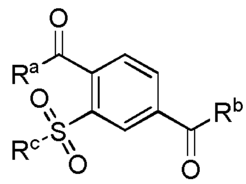
IV

wherein $R^c$ represents -OH, or -OR with R being -($C_1$-$C_6$)alkyl, or -O-$M^+$ with $M^+$ being $NH_4^+$, $Li^+$, $Na^+$ or $K^+$, or -$O^-$(½$M^{2+}$) with $M^{2+}$ being $Mg^{2+}$ or $Ca^{2+}$; and

(i) $R^a$ and $R^b$ are independently selected from -halo, -OH, -$OR^1$, -$NH_2$ and -$N(R^1)_2$ with $R^1$ being -($C_1$-$C_6$)alkyl or -C(=O)($C_1$-$C_4$)alkyl, or
(ii) $R^a$ -$R^b$ together represent an oxygen bridge -O-,

and mixtures thereof, and
wherein the monomers A2 are selected from the group consisting of non-sulfonated aromatic dicarboxylic acid based monomers of the following general formulae (V), (VI) and (VII)

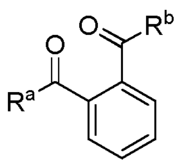
V
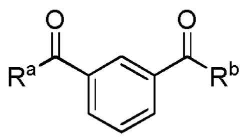
VI
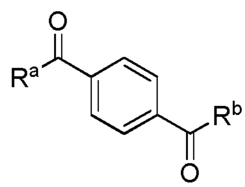
VII

wherein

(i) $R^a$ and $R^b$ are independently selected from -halo, -OH, -$OR^1$, -$NH_2$ and -$N(R^1)_2$ with $R^1$ being -($C_1$-$C_6$)alkyl or -C(=O)($C_1$-$C_4$)alkyl, or
(ii) $R^a$ -$R^b$ together represent an oxygen bridge -O-,

and mixtures thereof;

(b) the group of monomers B consists of

(b1) monomers B1, or
(b2) monomers B1 and monomers B2, with monomers B1 and monomers B2 being present in a molar ratio of at least 1:9, preferably at least 4:1,

wherein the monomers B1 are selected from the group consisting of unsaturated dicarboxylic acid based monomers of the following general formula (VIII)

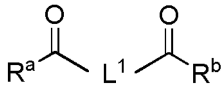

VIII

wherein
$L^1$ represents a linear or branched $C_2$-$C_8$-alkylene chain, and

(i) $R^a$ and $R^b$ are independently selected from -halo, -OH, $-OR^1$, $-NH_2$ and $-N(R^1)_2$ with $R^1$ being $-(C_1-C_6)$alkyl or $-C(=O)(C_1-C_4)$alkyl, or
(ii) $R^a$ -$R^b$ together represent an oxygen bridge -O-,

and mixtures thereof, and
wherein the monomers B2 are selected from the group consisting of saturated dicarboxylic acid based monomers of the following general formula (IX)

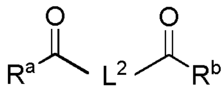

IX

wherein
$L^2$ represents a linear or branched $C_1$-$C_{22}$-alkyl chain, preferably a linear or branched $C_1$-$C_8$-alkyl chain, and

(i) $R^a$ and $R^b$ are independently selected from -halo, -OH, $-OR^1$, $-NH_2$ and $-N(R^1)_2$ with $R^1$ being $-(C_1-C_6)$alkyl or $-C(=O)(C_1-C_4)$alkyl, or
(ii) $R^a$ -$R^b$ together represent an oxygen bridge -O-,

and mixtures thereof;

(c) the group of monomers C consists of

(c1) monomers C1,
(c2) monomers C2, or
(c3) monomers C1 and C2,

wherein the monomers C1 are selected from the group consisting of ethylene glycol based monomers of the following general formula (X)

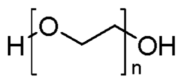

(X)

wherein n is an integer of from 1 to 150,
and mixtures thereof, and
wherein the monomers C2 are selected from the group consisting of propylene glycol based monomers of the following general formula (XI)

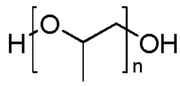

(XI)

wherein n is 1, 2, 3, 4, 5 or 6,
and mixtures thereof;
wherein the molar ratio of the units derived from the group of monomers A to the units derived from the group of monomers B is from 9:1 to 1:2.4 in the polyester, and
wherein the molar ratio of the units derived from the groups of monomers A and B to the units derived from the group of monomers C is from 1.3:1 to 1:1.3 in the polyester.

It has surprisingly been found that, if polyesters not only comprise units derived from unsaturated dicarboxylic acid based monomers of general formula (VIII), but also units derived from aromatic sulfonated dicarboxylic acid based monomers of formula (I), (II), (III) or (IV), in combination with units derived from ethylene glycol based monomers of formula (X) and/or propylene glycol based monomers of formula (XI), said polyesters exhibit advantageous properties in terms of the water absorption capacity, stickiness and flowability, if they are cross-linked. Furthermore, it has been found that said cross-linked polyesters accelerate plant growth significantly, if used for agricultural applications.

The terms "polyethylene glycol monomers" and "ethylene glycol based monomers" are used synonymously. The terms "polypropylene glycol monomers" and "propylene glycol based monomers" are used synonymously.

Accordingly, it is preferred that the polyesters according to the present invention are cross-linked for the purposes of the invention.

The advantageous properties in terms of the water absorption capacity of the cross-linked polyesters of the invention may be attributed to the fact that, upon cross-linking the polyesters of the invention, only a low or medium cross-link density will be obtained, but not a high cross-link density, because some of the unsaturated dicarboxylic acid based units are replaced by aromatic sulfonated dicarboxylic acid based units, which cannot contribute to cross-linking of the polyester chains. Furthermore, also the sulfonate groups of the aromatic sulfonated dicarboxylic acid based units themselves may positively influence the water absorption capacity because of their polarity and hygroscopicy.

The advantageous properties in terms of the stickiness and flowability of the cross-linked polyesters of the invention can also be attributed to the presence of the aromatic sulfonated dicarboxylic acid based units because they provide the polyester with hardness.

Still further, it should be pointed out that the sulfonate groups in the polyesters of the invention may advantageously act as an ion exchanger to bind e.g. heavy metals in soils.

The invention further relates to a composition comprising as compounds the cross-linked polyester of the invention and saw dust or flax dust or a combination thereof. Preferably, the saw dust or flax dust is embedded in the three-dimensional network of the cross-linked polyester. As a consequence, the water absorption capacity and the water retention capacity as well as the flowability properties are improved. The improved water absorption capacity may e.g. result in an improved plant growth.

Furthermore, the invention relates to an absorbent material comprising the cross-linked polyester according to the present invention or the composition according to the present invention. Said absorbent material exhibits particularly advantageous water absorption properties.

Moreover, the present invention relates to a soil treatment product comprising the cross-linked polyester according to the present invention or the composition according to the present invention, and at least one additional compound selected from the group consisting of fillers, nutrients, fertilizers, pesticides and combinations thereof. Said soil treatment product is particularly advantageous not only because of its biodegradability and water absorption capacity, but also because of its flowability, which allows the soil treatment product to be homogenously distributed in soils.

The present invention also relates to the use of the cross-linked polyesters of the invention or the compositions of the invention for agricultural applications, preferably for improving the physiological properties of soils, more preferably for absorbing and storing humidity in soils, and/or for improving the soil structure by loosening the soil. In this context, it has surprisingly been found that plant growth is accelerated by at least 20%, preferably at least 30%, more preferably at least 40%.

**Figures**

Figure 1: Water absorption capacities of a cross-linked polyester comprising units derived from 5-sulfoisophthalic acid sodium salt monomers and the units derived from maleic anhydride monomers in a molar ratio of 1:1, and units derived from ethylene glycol based monomers with n being 1, 2, 3 or 4 or units derived from a mixture of ethylene glycol based monomers with n being 2 and 3, wherein the molar ratio of the units derived from 5-sulfoisophthalic acid sodium

salt monomers and the units derived from maleic anhydride monomers relative to the units derived from ethylene glycol based monomers with n being 1, 2, 3 or 4 or units derived from a mixture of ethylene glycol based monomers with n being 2 and 3 is 1:1.

## Detailed description of the invention

The polyester according to the present invention comprises units derived from groups of monomers A, B and C, wherein the molar ratio of the units derived from the group of monomers A to the units derived from the group of monomers B is from 9:1 to 1:2.4 in the polyester, and wherein the molar ratio of the units derived from the groups of monomers A and B to the units derived from the group of monomers C is from 1.3:1 to 1:1.3 in the polyester.
In a preferred embodiment, the polyester comprises units derived from groups of monomers A, B and C, wherein the molar ratio of the units derived from the group of monomers A to the units derived from the group of monomers B is from 2.4:1 to 1:2.4, more preferably from 1.3:1 to 1:1.3, most preferably about 1:1 in the polyester. In another preferred embodiment, the molar ratio of the units derived from the groups of monomers A and B to the units derived from the group of monomers C is from 1.2:1 to 1:1.2, more preferably from 1.1:1 to 1:1.1, most preferably about 1:1 in the polyester. It is particularly preferred that polyester according to the present invention comprises units derived from groups of monomers A, B and C, wherein the molar ratio of the units derived from the group of monomers A to the units derived from the group of monomers B is from 2.4:1 to 1:2.4 in the polyester, and wherein the molar ratio of the units derived from the groups of monomers A and B to the units derived from the group of monomers C is from 1.2:1 to 1:1.2 in the polyester.
In this context, the term "molar ratio" is to be understood as the ratio of the amounts of the units in mol% based on the complete polyester chain. In this context, it should be noted that it is typically assumed in the art that the complete polyester chain is represented by 200 mol%, wherein about 100 mol% are represented by the units derived from dicarboxylic acid based monomers and about 100 mol% are represented by the units derived from diol based monomers, provided that no further units are present in the polyester chain. This corresponds to a molar ratio of the units derived from dicarboxylic acid based monomers to units derived from diol based monomers of about 1:1. The same can be applied to the polyesters of the present invention, wherein it has to be taken into account, however, that the units derived from groups of monomers A and B both represent units derived from dicarboxylic acid based monomers. Accordingly, the units derived from groups of monomers A and B together preferably represent 100 mol% of the complete polyester chain, and the units derived from the group of monomers C represents the other 100 mol% of the complete polyester chain represented by 200 mol%, provided that no other units are present in the polyester chain. According to the present invention, the molar ratio of the units derived from the group of monomers A to the units derived from the group of monomers B may vary between 9:1 to 1:2.4, preferably from 2.4:1 to 1:2.4, more preferably from 1.3:1 to 1:1.3, most preferably about 1:1 in the polyester. Accordingly, the units derived from the group of monomers A may e.g. be present in an amount of from 90 mol% to 20 mol%, and the units derived from the groups of monomers B may e.g. be present in an amount of from 10 mol% to 80 mol% at the same time, so that the sum of the mol% values preferably is about 100 mol% based on the complete polyester chain represented by 200 mol%, provided that no other units are present in the polyester chain. Preferably the units derived from the group of monomers A are present in an amount of about 50 mol% and the units derived from the group of monomers B are also present in an amount of about 50 mol% based on the complete polyester chain represented by 200 mol%.
For example, if the units derived from the groups of monomers A and B are both present in an amount of 50 mol% and the units derived from the group of monomers C are present in an amount of 100 mol%, the molar ratio of the units derived from the group of monomers A to the units derived from the group of monomers B is 1:1, and the molar ratio of the units derived from the groups of monomers A and B to the units derived from the group of monomers C is also 1:1.
According to the present invention, the group of monomers A consists of

(a1) monomers A1, or
(a2) monomers A1 and monomers A2, with monomers A1 and monomers A2 being present in a molar ratio of at least 31:69, preferably at least 4:1.

Thus, the group of monomers A may either comprise exclusively the monomers A1 or the monomers A1 in combination with monomers A2, wherein the monomers A1 and the monomers A2 are present in a molar ratio of at least 31:69, preferably at least 1:2, more preferably at least 2:3, most preferably at least 1:1, particularly preferably at least 2:1, most particularly preferably at least 3:1, in particular at least 4:1, for example preferably at least 6:1, for example at least 9:1.
In this context, the molar ratio is again to be understood as the ratio of the amounts of the units in mol% based on the complete polyester chain. With regard to the above example of units derived from the group of monomers A being

present e.g. in an amount of 50 mol% based on the complete polyester chain represented by 200 mol%, a molar ratio of monomers A1 to A2 of 4:1 e.g. means 40 mol% of monomers A1 and 10 mol% of monomers A2 based on the complete polyester chain represented by 200 mol%, provided that no other units are present in the polyester chain. With regard to the above example of units derived from the group of monomers A being present e.g. in an amount of 50 mol% based on the complete polyester chain represented by 200 mol%, a molar ratio of monomers A1 to A2 of 31:69 e.g. means 15.5 mol% of monomers A1 and 34.5 mol% of monomers A2 based on the complete polyester chain represented by 200 mol%, provided that no other units are present in the polyester chain.

According to the present invention, the monomers A1 are selected from the group consisting of aromatic sulfonated dicarboxylic acid based monomers of the following general formulae (I), (II), (III) and (IV)

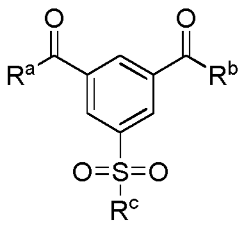
I

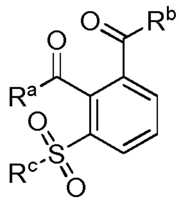
II

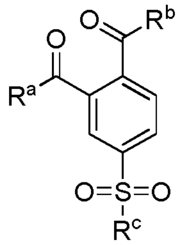
III

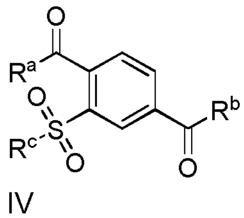
IV

wherein
$R^c$ represents -OH, or -OR with R being -($C_1$-$C_6$)alkyl, or -O-$M^+$ with $M^+$ being $NH_4^+$, $Li^+$, $Na^+$ or $K^+$, or -$O^-$(½$M^{2+}$) with $M^{2+}$ being $Mg^{2+}$ or $Ca^{2+}$; and

(i) $R^a$ and $R^b$ are independently selected from -halo, -OH, -$OR^1$, -$NH_2$ and - $N(R^1)_2$ with $R^1$ being -($C_1$-$C_6$)alkyl or -C(=O)($C_1$-$C_4$)alkyl, or
(ii) $R^a$ -$R^b$ together represent an oxygen bridge -O-,

and mixtures thereof.

Preferably, the monomers A1 are selected from the group consisting of aromatic sulfonated dicarboxylic acid based monomers of the following general formulae (I)

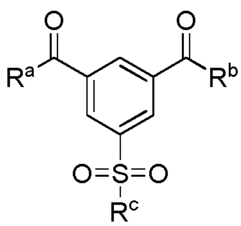
I

wherein
$R^c$ represents -OH, or -OR with R being -($C_1$-$C_6$)alkyl, or -O-$M^+$ with $M^+$ being $NH_4^+$, $Li^+$, $Na^+$ or $K^+$, or -$O^-$(½$M^{2+}$) with $M^{2+}$ being $Mg^{2+}$ or $Ca^{2+}$; and

(i) $R^a$ and $R^b$ are independently selected from -halo, -OH, -$OR^1$, -$NH_2$ and - $N(R^1)_2$ with $R^1$ being -($C_1$-$C_6$)alkyl or -C(=O)($C_1$-$C_4$)alkyl, or
(ii) $R^a$ -$R^b$ together represent an oxygen bridge -O-,

and mixtures thereof.

More preferably, the monomers A1 are selected from the group consisting of aromatic sulfonated dicarboxylic acid based monomers of the following general formulae (I)

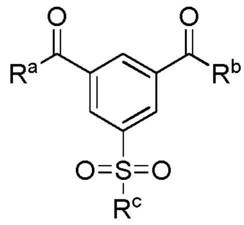

I

wherein

$R^c$ represents -OH, or -OR with R being -($C_1$-$C_2$)alkyl, or -O-$M^+$ with $M^+$ being $NH_4^+$, $Li^+$, $Na^+$ or $K^+$; and

(i) $R^a$ and $R^b$ are independently selected from -OH, -$OR^1$, with $R^1$ being -($C_1$-$C_2$)alkyl or -C(=O)($C_1$-$C_2$)alkyl, or
(ii) $R^a$ -$R^b$ together represent an oxygen bridge -O-,

and mixtures thereof.

More preferably, the monomers A1 are selected from the group consisting of aromatic sulfonated dicarboxylic acid based monomers of the following general formulae (I)

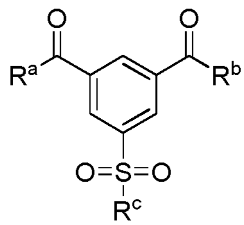

I

wherein

$R^c$ represents -OH, or -$O^-M^+$ with $M^+$ being $Na^+$, and
$R^a$ and $R^b$ both represent -OH,

and mixtures thereof.

According to the present invention, the monomers A2 are selected from the group consisting of non-sulfonated aromatic dicarboxylic acid based monomers of the following general formulae (V), (VI) and (VII)

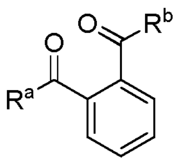

V

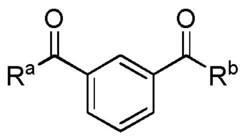

VI

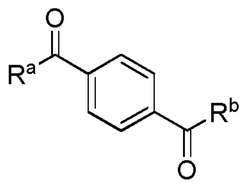

VII

wherein

(i) $R^a$ and $R^b$ are independently selected from -halo, -OH, -$OR^1$, -$NH_2$ and - $N(R^1)_2$ with $R^1$ being -($C_1$-$C_6$)alkyl or -C(=O)($C_1$-$C_4$)alkyl, or
(ii) $R^a$ -$R^b$ together represent an oxygen bridge -O-,

and mixtures thereof.

Preferably, the monomers A2 are selected from the group consisting of non-sulfonated aromatic dicarboxylic acid based monomers of the following general formulae (V), (VI) and (VII)

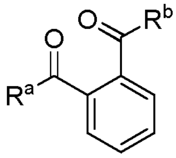
V
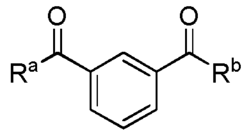
VI
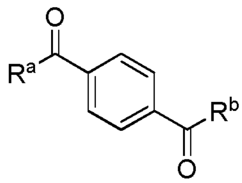
VII

wherein

(i) $R^a$ and $R^b$ are independently selected from -OH, -$OR^1$, with $R^1$ being -($C_1$-$C_2$)alkyl or -C(=O)($C_1$-$C_2$)alkyl, or
(ii) $R^a$ -$R^b$ together represent an oxygen bridge -O-,

and mixtures thereof.

More preferably, the monomers A2 are selected from the group consisting of non-sulfonated aromatic dicarboxylic acid based monomers of the following general formulae (V), (VI) and (VII)

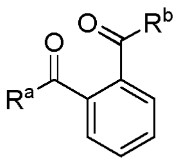
V
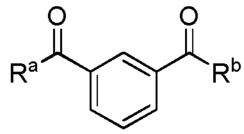
VI
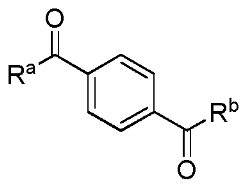
VII

wherein

$R^a$ and $R^b$ both represent -OH,
and mixtures thereof.

According to the present invention, the group of monomers B consists of

(b1) monomers B1, or
(b2) monomers B1 and monomers B2, with monomers B1 and monomers B2 being present in a molar ratio of at least 1:9, preferably at least 4:1.

Thus, the group of monomers B may either comprise exclusively the monomers B1 or the monomers B1 in combination with monomers B2, wherein the monomers B1 and the monomers B2 are present in a molar ratio of at least 1:9, preferably at least 1:5, more preferably at least 1:3, most preferably at least 1:1, particularly preferably at least 2:1, most particularly preferably at least 3:1, in particular at least 4:1, for example preferably at least 6:1, for example at least 9:1.

In this context, the molar ratio is again to be understood as the ratio of the amounts of the units in mol% based on the complete polyester chain. With regard to the above example of units derived from the group of monomers B being present e.g. in an amount of 50 mol% based on the complete polyester chain represented by 200 mol%, a molar ratio of monomers B1 to B2 of 4:1 e.g. means 40 mol% of monomers B1 and 10 mol% of monomers B2 based on the complete polyester chain represented by 200 mol%, provided that no other units are present in the polyester chain. With regard to the above example of units derived from the group of monomers B being present e.g. in an amount of 50 mol% based on the complete polyester chain represented by 200 mol%, a molar ratio of monomers B1 to B2 of 1:9 e.g. means 5 mol% of monomers B1 and 45 mol% of monomers B2 based on the complete polyester chain represented by 200 mol%, provided that no other units are present in the polyester chain.

According to the present invention, the monomers B1 are selected from the group consisting of unsaturated dicarboxylic acid based monomers of the following general formula (VIII)

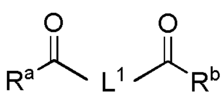
VIII

wherein
$L^1$ represents a linear or branched $C_2$-$C_8$-alkylene chain, and

(i) $R^a$ and $R^b$ are independently selected from -halo, -OH, -$OR^1$, -$NH_2$ and - $N(R^1)_2$ with $R^1$ being -($C_1$-$C_6$)alkyl or -C(=O)($C_1$-$C_4$)alkyl, or
(ii) $R^a$ -$R^b$ together represent an oxygen bridge -O-,

and mixtures thereof.

In this context, a linear or branched $C_2$-$C_8$-alkylene chain has to be understood as a linear or branched alkylene chain comprising from 2 to 8 carbon atoms, wherein at least two of these carbon atoms are connected to each other via a double bond. Preferably, the $C_2$-$C_8$-alkylene chain comprises only one double bond, wherein said double bond may be present in (E)- or (Z)-configuration, preferably in (Z)-configuration. The presence of a double bond may also be indicated by the term "unsaturation", e.g. in the context of "unsaturated dicarboxylic acid based monomers", which comprise $L^1$, i.e. a linear or branched $C_2$-$C_8$-alkylene chain.

Preferably, the monomers B1 are selected from the group consisting of unsaturated dicarboxylic acid based monomers of the following general formula (VIII)

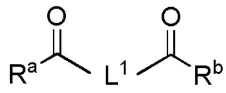

VIII

wherein
$L^1$ represents a linear or branched $C_2$-$C_4$-alkylene chain, and

(i) $R^a$ and $R^b$ are independently selected from -OH, -$OR^1$ with $R^1$ being -($C_1$-$C_2$)alkyl or -C(=O)($C_1$-$C_2$)alkyl, or
(ii) $R^a$ -$R^b$ together represent an oxygen bridge -O-,

and mixtures thereof.

In this context, a linear or branched $C_2$-$C_4$-alkylene chain has to be understood as a linear or branched alkylene chain comprising from 2 to 4 carbon atoms, wherein at least two of these carbon atoms are connected to each other via a double bond. Preferably, the $C_2$-$C_4$-alkylene chain comprises only one double bond, wherein said double bond may be present in (E)- or (Z)-configuration, preferably in (Z)-configuration.

More preferably, the monomers B1 are selected from the group consisting of unsaturated dicarboxylic acid based monomers of the following general formula (VIII)

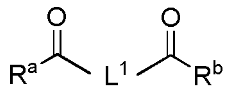

VIII

wherein
$L^1$ represents a linear or branched $C_2$-$C_4$-alkylene chain, and

(i) $R^a$ and $R^b$ both represent -OH, or
(ii) $R^a$ -$R^b$ together represent an oxygen bridge -O-,

and mixtures thereof.

According to the present invention, the monomers B2 are selected from the group consisting of saturated dicarboxylic acid based monomers of the following general formula (IX)

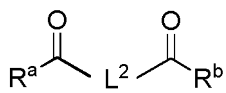

IX

wherein
$L^2$ represents a linear or branched $C_1$-$C_{22}$-alkyl chain, preferably a linear or branched $C_1$-$C_8$-alkyl chain and

(i) $R^a$ and $R^b$ are independently selected from -halo, -OH, $-OR^1$, $-NH_2$ and - $N(R^1)_2$ with $R^1$ being $-(C_1$-$C_6)$alkyl or $-C(=O)(C_1$-$C_4)$alkyl, or
(ii) $R^a$ -$R^b$ together represent an oxygen bridge -O-,

and mixtures thereof.

In this context, a linear or branched $C_1$-$C_8$-alkyl chain has to be understood as a linear or branched alkyl chain comprising from 1 to 8 carbon atoms, which are connected to each other via single bonds.

Preferably, the monomers B2 are selected from the group consisting of saturated dicarboxylic acid based monomers of the following general formula (IX)

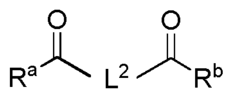

IX

wherein
$L^2$ represents a linear or branched $C_1$-$C_{22}$ alkyl chain, preferably a linear or branched $C_1$-$C_4$ alkyl chain, and

(i) $R^a$ and $R^b$ are independently selected from -OH, $-OR^1$, with $R^1$ being $-(C_1$-$C_2)$alkyl or $-C(=O)(C_1$-$C_2)$alkyl, or
(ii) $R^a$ -$R^b$ together represent an oxygen bridge -O-,

and mixtures thereof.

In this context, a linear or branched $C_1$-$C_4$-alkyl chain has to be understood as a linear or branched alkyl chain comprising from 1 to 4 carbon atoms, which are connected to each other via single bonds. In this context, a linear or branched $C_1$-$C_{22}$-alkyl chain has to be understood as a linear or branched alkyl chain comprising from 1 to 22 carbon atoms, which are connected to each other via single bonds.

More preferably, the monomers B2 are selected from the group consisting of saturated dicarboxylic acid based monomers of the following general formula (IX)

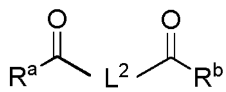

IX

wherein
$L^2$ represents a linear or branched $C_1$-$C_{22}$-alkyl chain, preferably a linear or branched $C_1$-$C_4$ alkyl chain, and

(i) $R^a$ and $R^b$ are independently selected from -OH, or
(ii) $R^a$ -$R^b$ together represent an oxygen bridge -O-,

and mixtures thereof.

According to the present invention, the group of monomers C consists of

(c1) monomers C1,
(c2) monomers C2, or
(c3) monomers C1 and C2.

Thus, the group of monomers C may either exclusively comprise the monomers C1 or exclusively comprise the monomers C2, or the group of monomers C may comprise the monomers C1 in combination with monomers C2, wherein the monomers C1 and C2 may be present in any molar ratio.

According to the present invention, the monomers C1 are selected from the group consisting of ethylene glycol based monomers of the following general formula (X)

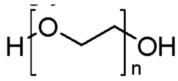

(X)

wherein n is an integer of from 1 to 150, preferably 1, 2, 3, 4, 5 or 6,
and mixtures thereof.

Preferably, the monomers C1 are selected from the group consisting of ethylene glycol based monomers of the following general formula (X)

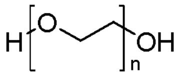

(X)

wherein n is 1, 2, 3, or 4,
and mixtures thereof.

More preferably, the monomers C1 are ethylene glycol based monomers of the following general formula (X)

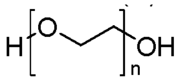

(X)

wherein n is 1 or 2, particularly preferably 2.

It has been found that, if diethylene glycol is used as monomer C1, the water absorption capacity of the cross-linked polyesters can be significantly improved.

According to the present invention, the monomers C2 are selected from the group consisting of propylene glycol based monomers of the following general formula (XI)

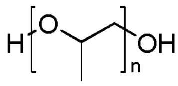

(XI)

wherein n is 1, 2, 3, 4, 5 or 6,
and mixtures thereof.

Preferably, the monomers C2 are selected from the group consisting of propylene glycol based monomers of the following general formula (XI)

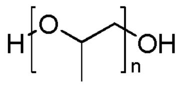

(XI)

wherein n is 1, 2, 3, or 4,
and mixtures thereof.

More preferably, the monomers C2 are propylene glycol based monomers of the following general formula (XI)

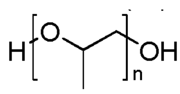

(XI)

wherein n is 1 or 2, particularly preferably 2.

The polyester according to the present invention may also be defined by the structures of the units derived from the groups of monomers A, B and C as defined above. The positions, where each unit is connected to a further unit will be represented by a wavy line in the following.

According to the present invention, the polyester comprises units derived from monomers A1 or units derived from monomers A1 and A2, with units derived from monomers A1 and units derived from monomers A2 being present in a molar ratio of at least 31:69, preferably at least 4:1.

According to the present invention, the units derived from monomers A1 are selected from the group consisting of units having the following structures (I*), (II*), (III*) and (IV*):

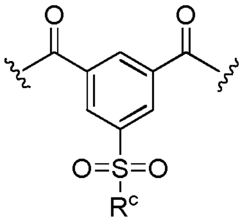

I*

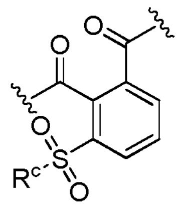

II*

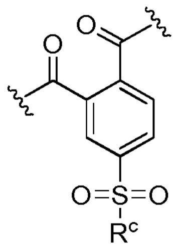

III*

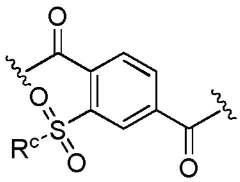

IV*

wherein $R^c$ represents -OH, or -OR with R being -($C_1$-$C_6$)alkyl, or $-O^-M^+$ with $M^+$ being $NH_4^+$, $Li^+$, $Na^+$ or $K^+$, or $-O^-(½M^{2+})$ with $M^{2+}$ being $Mg^{2+}$ or $Ca^{2+}$, and mixtures thereof.

Preferably, the units derived from monomers A1 are represented by the structure (I*), wherein $R^c$ represents -OH, or OR with R being -($C_1$-$C_6$)alkyl, or $-O^-M^+$ with $M^+$ being $NH_4^+$, $Li^+$, $Na^+$ or $K^+$. More preferably, the units derived from monomers A1 are represented by the structure (I*), wherein $R^c$ represents -OH, or $-O^-M^+$ with $M^+$ being $Na^+$.

According to the present invention, the units derived from monomers A2 are selected from the group consisting of units having the following structures (V*), (VI*) and (VII*):

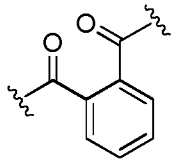

V*

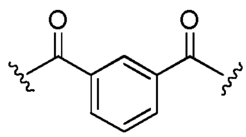

VI*

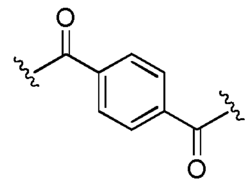

VII*

and mixtures thereof.

According to the present invention, the polyester comprises units derived from monomers B1 or units derived from monomers B1 and B2, with units derived from monomers B1 and units derived from monomers B2 being present in a molar ratio of at least 1:9, preferably at least 4:1.

According to the present invention, the units derived from monomers B1 are selected from the group consisting of units having the following structure (VIII*):

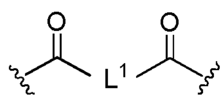

VIII*

wherein $L^1$ represents a linear or branched $C_2$-$C_8$-alkylene chain, and mixtures thereof.

Preferably, the units derived from monomers B1 are represented by the structure (VIII*), wherein $L^1$ represents a linear or branched $C_2$-$C_4$-alkylene chain.

According to the present invention, the units derived from monomers B2 are selected from the group consisting of units having the following structure (IX*):

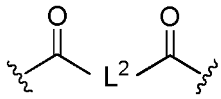

IX*

wherein $L^2$ represents a linear or branched $C_1$-$C_{22}$-alkyl chain, preferably a linear or branched $C_1$-$C_8$-alkyl chain, and mixtures thereof.

Preferably, the units derived from monomers B2 are represented by the structure (IX*), wherein $L^1$ represents a linear or branched $C_1$-$C_8$-alkyl chain, preferably a linear or branched $C_1$-$C_4$-alkyl chain.

According to the present invention, the polyester comprises units derived from monomers C1 or units derived from monomers C2, or units derived from monomers C1 and monomers C2.

According to the present invention, the units derived from monomers C1 are selected from the group consisting of units having the following structure (X*):

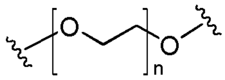

X*

wherein n is an integer of from 1 to 150, preferably 1, 2, 3, 4, 5 or 6, and mixtures thereof.

Preferably, the units derived from monomers C1 are represented by the structure (X*), wherein n is 1, 2, 3 or 4 and mixtures thereof. More preferably, the units derived from monomers C1 are represented by the structure (X*), wherein n is 1 or 2.

According to the present invention, the units derived from monomers C2 are selected from the group consisting of units having the following structure (XI*):

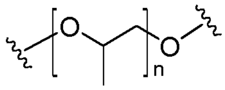

XI*

wherein n is 1, 2, 3, 4, 5 or 6, and mixtures thereof.

Preferably, the units derived from monomers C2 are represented by the structure (XI*), wherein n is 1, 2, 3 or 4 and mixtures thereof. More preferably, the units derived from monomers C2 are represented by the structure (XI*), wherein n is 1 or 2.

In a preferred embodiment, the polyester of the present invention may not only comprise the above described units derived from the groups of monomers A, B and C, but also alternative units or additives in an amount of at most 10 wt.-%, preferably at most 5 wt.-%, more preferably at most 1 wt.-%.

In another preferred embodiment of the invention, the units derived from the groups of monomers A, B and C are together present in an amount of at least 90 wt.-%, preferably at least 95 wt.-%, more preferably of at least 99 wt.-% based on the total weight of the polyester.

In another preferred embodiment of the invention, the polyester of the present invention exclusively comprises units derived from the groups of monomers A, B and C.

In one embodiment of the invention, the units derived from monomers A1 are present in an amount of at least 16 wt.-%, preferably at least 20 wt.-%, more preferably at least 30 wt.-%, most preferably at least 35 wt.-%, in particular at least 40 wt.-% based on the total weight of the polyester. Preferably, the units derived from monomers A1 are present in an amount of from 16 wt.-% to 65 wt.-%, preferably from 20 wt.-% to 60 wt.-%, more preferably 30 wt.-% to 55 wt.-%.

In another embodiment of the invention, the units derived from monomers A, preferably from monomers A1, are present in an amount of at least 20 mol%, preferably at least 25 mol%, more preferably at least 30 mol%, most preferably at least 35 mol%, particularly preferably at least 40 mol%, more particularly preferably at least 45 mol%, most particularly preferably at least 50 mol%, in particular at least 55 mol%, for example at least 60 mol%, wherein the units derived from groups of monomers A and B together preferably represent 100 mol% of the complete polyester chain, and the units derived from the group of monomers C represents the other 100 mol% of the complete polyester chain

represented by 200 mol%, provided that no other units are present in the polyester chain.
In yet another embodiment of the invention, the units derived from monomers A, preferably from monomers A1, are present in an amount of at least 20 mol%, preferably at least 25 mol%, more preferably at least 30 mol%, most preferably at least 35 mol%, particularly preferably at least 40 mol%, more particularly preferably at least 45 mol%, most particularly preferably at least 50 mol%, in particular at least 55 mol%, for example at least 60 mol%, wherein the units derived from groups of monomers A, B and C together preferably represent 100 mol% of the complete polyester chain, provided that no other units are present in the polyester chain.

In another embodiment, the units derived from monomers B1 are present in an amount of at least 5 wt.-%, preferably at least 8 wt.-%, preferably at least 10 wt.-% based on the total weight of the polyester. Preferably, the units derived from monomers B1 are present in an amount of from 5 wt.-% to 40 wt.-%, preferably from 8 wt.-% to 30 wt.-%, more preferably from 10 wt.-% to 25 wt.-%.

When defining the polyester of the invention comprising the units derived from the groups of monomers A, B and C by specifying the groups of monomers A, B and C as indicated above, the polyester is defined by specifying the precursors, from which the polyester is obtainable. It is of course particularly advantageous to use structurally simple and preferably commercially available precursors. Accordingly, the following monomers may be considered as particularly preferred.

In a preferred embodiment of the present invention, the monomers A1 are selected from the group consisting of 5-sulfoisophthalic acid based monomers, alkali salts thereof and mixtures thereof, and are preferably selected from the group consisting of 5-sulfoisophthalic acid based monomers and alkali salts thereof, and are particularly preferably 5-sulfoisophthalic acid sodium salt monomers.

In another preferred embodiment of the present invention, the monomers A2 are selected from the group consisting of therephthalic acid based monomers, isophthalic acid based monomers, phthalic acid based monomers and mixtures thereof, and are preferably selected from the group consisting of isophthalic acid based monomers, therephthalic acid based monomers and mixtures thereof, and are particularly preferably isophthalic acid monomers.

In another preferred embodiment of the present invention, the monomers B1 are selected from the group consisting of maleic acid based monomers, fumaric acid based monomers, glutaconic acid based monomers, itaconic acid based monomers and mixtures thereof, and are preferably selected from the group consisting of maleic acid based monomers, and are particularly preferably maleic anhydride monomers.

In another preferred embodiment of the present invention, the monomers B2 are selected from the group consisting of malonic acid based monomers, succinic acid based monomers, glutaric acid based monomers, adipic acid based monomers, sebacic acid based monomers and mixtures thereof, and are preferably selected from the group consisting of succinic acid based monomers, adipic acid based monomers and mixtures thereof, and are particularly preferably succinic acid and adipic acid monomers.

In another preferred embodiment of the present invention, the monomers C1 are selected from the group consisting of ethyleneglycol monomers, diethyleneglycol monomers, triethyleneglycol monomers and mixtures thereof, and are preferably diethyleneglycol monomers.

In another preferred embodiment of the present invention, the monomers C2 are selected from the group consisting of propyleneglycol monomers, dipropyleneglycol monomers and mixtures thereof, and are preferably dipropyleneglycol monomers.

In one embodiment of the present invention, the polyester comprises units derived from groups of monomers A, B and C,

(a) wherein the group of monomers A consists of 5-sulfoisophthalic acid sodium salt monomers A1; and
(b) wherein the group of monomers B consist of maleic anhydride monomers B1; and
(c) wherein the group of monomers C consists of diethylene glycol monomers C1.

Preferably, the molar ratio of the above defined units derived from the group of monomers A to the above defined units derived from the group of monomers B is from 9:1 to 1:2.4, and the molar ratio of the above defined units derived from the groups of monomers A and B to the above defined units derived from the group of monomers C is from 1.1:1 to 1:1.1.

Thus, the polyester preferably comprises the following units derived from the group of monomers A:

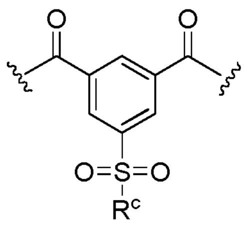

;

and the follwong units derived from the group of monomers B

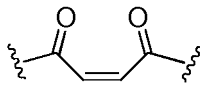

;

and the following units derived from the group of monomers C

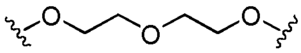

.

Preferably, the molar ratio of the above units derived from the group of monomers A to the above units derived from the group of monomers B is from 9:1 to 1:2.4, and the molar ratio of the above units derived from the groups of monomers A and B to the above units derived from the group of monomers C is from 1.1:1 to 1:1.1.

In one embodiment of the present invention, the polyester has a number average molecular weight (Mn) in the range of from 500 to 30000 g/mol, preferably from 800 to 20000 g/mol, most preferably from 1000 to 10000g/mol.

The polyesters according to the present invention can be prepared by a heat-activated condensation reaction. Preferably, the group of monomers A is reacted with an approximately equimolar amount of the group of monomers C at a temperature of from 150°C to 250°C for a time period of from 1 h to 3 h in a first step, and then the group of monomers B together with an approximately equimolar amount of the group of monomers C are added to the reaction mixture, and the resulting mixture is further reacted at a temperature of from 150°C to 250°C for a time period of from 0.5 h to 2 h in a second step, and in a third step, vacuum is applied to the reaction mixture, in order to remove any residual water.

For the purposes of the invention, it is particularly preferred that the above described polyester is cross-linked.

In one embodiment of the present invention, the polyester is cross-linked, wherein cross-linking is preferably achieved in that the unsaturated polyester chains are directly cross-linked with each other by reacting the double bonds contained therein with each other. Accordingly, it is not necessary to add an unsaturated monomer such as styrene for cross-linking.

In a preferred embodiment, such a cross-linked polyester is obtainable by thermal cross-linking at a temperature of from 150°C to 250°C for at least 20 h, optionally in the presence of a peroxide. If cross-linking is performed in the absence of a peroxide, vacuum is preferably applied during heat treatment. If a peroxide is used, said peroxide is preferably hydrogen peroxide or sodium persulfate. Alternatively, the peroxide may be an organic peroxide such as tert-butylperbenzoate, 1,1-di-(tert.-butylperoxy-)3,3,5-trimethylcyclohexane, dicumylperoxide, 1,1-di-(t-amylperoxy) cyclohexane, 1,1-di-(t-butylperoxy) 3,3,5-trimethyl cyclohexane, 1,1-di-(t-butylperoxy) cyclohexane, t-amyl peroxybenzoate, t-butyl peroxyacetate, t-butyl peroxybenzoate, ethyl 3,3-di-(t-amylperoxy) butyrate, ethyl 3,3-di-(t-butylperoxy) butyrate, cumyl peroxyneodecanoate, cumyl peroxyneopheptanoate, t-amyl peroxyneodecanoate, t-butyl peroxyneodecanoate, di-(2-ethylhexyl) peroxy- dicarbonate, t-amyl peroxypivalate, t-butyl peroxypivalate, 2,5-dimethyl-2,5 bis(2-ethyl- hexanoylperoxy)hexane, dibenzoyl peroxide, t-amyl peroxy-2-ethylhexanoate, t-butyl peroxy-2-ethylhexanoate,

In a preferred embodiment of the present invention, the cross-linked polyester has a glass transition temperature $T_g$ of from 0°C to 200°C, preferably from 20°C to 190°C, more preferably from 70 to 180°C.

The cross-linked polyester of the invention exhibits a particularly high water absorption capacity.

In a preferred embodiment of the invention, the cross-linked polyester is capable of absorbing water or an aqueous solution in an amount of at least 30 g, preferably in an amount of at least 40 g, more preferably in an amount of at least 50 g, per gram of the cross-linked polyester, at a temperature of from 20°C to 30°C for an absorption time of 1 day.

In another preferred embodiment of the invention, the cross-linked polyester is capable of absorbing water or an aqueous solution in an amount of at least 30 g, preferably in an amount of from 30 g to 200 g, more preferably in an amount of from 40 g to 150 g, most preferably from 50 g to 140 g, per gram of the cross-linked polyester, at a temperature of from 20°C to 30°C for an absorption time of 1 day.

Furthermore, the cross-linked polyester is advantageous in terms of its biodegradability.

In a preferred embodiment of the present invention, the cross-linked polyester is biodegradable in soil by at least 20%, preferably at least 30%, more preferably at least 45%, most preferably at least 50% at a temperature of from 20°C to 30°C after 140 days, wherein the percentage value is calculated from the $CO_2$ formation compared to the carbon content of the tested amount of the cross-linked polyester. In particular, the percentage value defines the amount of carbon in mg, which has been converted the carbon dioxide, compared to the amount of carbon in mg in the tested sample of the cross-linked polyester, which may be determined by elemental analysis.

The present invention is also directed to a composition comprising as compounds the cross-linked polyester according to the invention, and saw dust. Preferably, the two compounds are together present in an amount of at least 90 wt.-%, more preferably in an amount of at least 99 wt.-%. Also said composition of the invention is advantageous in terms of its water absorption capacity and its biodegradability.

Furthermore, the present invention is directed to an absorbent material comprising the cross-linked polyester according to the invention or the composition according to the invention. Preferably, the polyester or the composition is present in an amount of at least 50%, more preferably at least 75%, most preferably at least 90% based on the total weight of the absorbent material.

Moreover, the present invention is directed to a soil treatment product comprising as compounds the cross-linked polyester according to the invention or the composition according to the invention, and at least one additional compound selected from the group consisting of organic and/or inorganic fillers, nutrients, fertilizers, pesticides, fungicides, herbicides and combinations thereof. Preferably, the compounds are together present in an amount of at least 50%, preferably at least 75%, more preferably at least 90% based on the total weight of the soil treatment product. More preferably, the cross-linked polyester according to the invention or the composition according to the invention and the additional compound are present in a weight ratio of from 80:20 to 20:80.

The soil treatment product according to the present invention is suitable for agricultural applications. For this purpose, the soil treatment product is preferably present in dry granular form, wherein the granulates exhibit good flow properties.

The present invention is also directed to the use of the cross-linked polyester according to the invention or the composition according to the invention for agricultural applications.

In a preferred embodiment, the cross-linked polyester according to the invention or the composition according to the invention can be used for improving the physiological properties of soils. This may e.g. be achieved by increasing their capacity to hold water, reducing erosion and runoff, reducing the frequency of irrigation, increasing the efficiency of the water being used, increasing soil permeability and infiltration, reducing the tendency of the soil to get compacted, and helping plant performance. In particular, the cross-linked polyester according to the invention or the composition according to the invention may be used for improving the physiological properties of plant soil, garden soil, meadow soil, lawn soil, forest soil, field soil, for preparing soils for cultivating plants, and for recultivating of fields, which have become deserted.

In another preferred embodiment, the cross-linked polyester according to the invention or the composition according to the invention is used for absorbing and storing humidity in soils, e.g. in areas under cultivation of plants. Alternatively or additionally, it is preferred that the cross-linked polyester according to the invention or the composition according to the invention is used for improving the soil structure by loosening the soil. Furthermore, the soil treatment product may also be used for uniformly distributing nutrients, minerals and fertilizers, wherein the nutrients, minerals and fertilizers are preferably released in a controlled manner over a time period of at least one month.

For the uses indicated above, the composition or the soil treatment product of the invention will preferably be added to the soil in an amount of 1 to 1000 kg/ha, preferably in an amount of 1 to 25 kg/ha field, or in an amount of from 0.1 to 100 kg/T soil.

As an effect, plant growth can significantly be accelerated.

In a preferred embodiment, plant growth is accelerated by using the cross-linked polyester or the composition of the invention in that the weight of a plant in treated soil is increased by at least 20%, preferably by at least 30%, most preferably by at least 40% compared to the weight of a plant in untreated soil, wherein the percentage value corresponds to the weight increase of the dry weight of the plant in treated soil after 3 weeks cultivation at a temperature of from 20°C to 30°C compared to the plant in untreated soil.

In a preferred embodiment, the yield of a plant is increased by using the cross-linked polyester or the composition of the invention in that the yield of a plant grown in treat soil is increased by at least 4%, preferably at least 7%, more preferably at least 10%, most preferably at least 14%, particularly preferably at least 19%, particularly at least 24 %, for example at least 29% compared to the yield of a plant in untreated soil. The plant for which the yield is increased is preferably a field crop, such as potatoes, sugar beets, tobacco, wheat, rye, barley, oats, rice, corn, cotton, soybeans, rape, legumes, sunflowers, coffee or sugar cane; fruits; vines; ornamentals; or vegetables, such as cucumbers, tomatoes, beans or squashes. More preferably, the plant for which the yield is increased is a vegetable selected from cucumbers, tomatoes, beans or squashes, and is most preferably tomato.

The invention is further illustrated by the examples, which are not to be understood as limiting the invention, however.

## Examples

### A. Determination methods

The following definitions of terms and determination methods apply for the above general description of the invention including the claims as well as to the below examples unless otherwise defined.

#### a) Determining the water absorption capacity (tea bag analysis)

The water absorption capacity can be determined by the "tea bag analysis" using deionized water.

The polyester is grinded and sieved, and the sieve fraction of 150 - 800 μm is used for testing. The polyester is dried and the residual moisture content is determined. 100 mg of the dry polyester is placed in a first teabag 1, and the teabag 1 is then sealed with a film sealer. Another 100 mg of the dry polyester is placed in a second teabag 2, and the teabag 2 is then sealed with a film sealer. Both teabags 1 and 2 are placed in 700 ml deionized water and stored at ambient temperature. Three further teabags 3, 4 and 5 without polyester are also placed in 700 ml deionized water and stored at ambient temperature.

After 24 hours, the teabags 1 and 2 are taken out of the water and hanged out inclined for 10 minutes to let the water drain off. Then the weight of teabags 1 and 2 is determined. Similarly, teabags 3, 4 and 5 are taken out of the water and hanged out inclined for 10 minutes to let the water drain off. Then the weight of teabags 3, 4 and 5 is determined and the average weight $W_0$ is determined. After that, teabags 1 and 2 are again placed in 700 ml deionized water and stored at ambient temperature.

After 48 hours, the teabags 1 and 2 are taken out of the water and hanged out inclined for 10 minutes to let the water drain off. Then the weight of teabags 1 and 2 is determined. After that, teabags 1 and 2 are again placed in 700 ml deionized water and stored at ambient temperature.

After 168 hours, the teabags 1 and 2 are taken out of the water and hanged out inclined for 10 minutes to let the water drain off. Then the weight of teabags 1 and 2 is determined.

The weight of the absorbed water is determined for the absorption times of 24 hours, 48 hours and 168 hours as follows:

$$\text{Weight of absorbed water} = \text{Weight of teabag 1} - \text{Weight of dry polymer} - W_0$$

$$\text{Weight of absorbed water} = \text{Weight of teabag 2} - \text{Weight of dry polymer} - W_0$$

Then, the weight of absorbed water is normalized to 1 g of dry polyester.

The results are provided as the weight of absorbed water in gram per weight of the dry polyester in gram [g (water)/g(polyester] after 24, 48 and 168 hours, respectively.

#### b) Determining the biological degradability (biodegradability)

The mineralization of the polyester is measured using the method and the manometric measurement system described by Robertz, M. *et al.* ("Cost-effective method of determining soil respiration in contaminated and uncontaminated soils for scientific and routine analysis" published in: Wise, D.L., *et al.* (eds.) Remediation Engineering of Contaminated Soil, 573 - 582, Marcel Dekker Inc., New York, Basel, 2000). The carbon mineralization is expressed as the difference in the accumulated soil respiration ($CO_2$ formation) with the polyester added minus without the polyester added. Per measuring unit, 50 g of dry soil is used to which water is added up to 50% of its maximum water holding capacity. The amount of the polyester added is equivalent to 50 mg C determined by elementary analysis. The soil used is a light textured soil from Limburgerhof, Germany, with pH 6.8. The results are the average of 4 replicates.

#### c) Determining the acceleration of plant growth (cylinder test)

With the aid of the test described hereinafter, the effects of the inventive polyesters on the shoot and root growth of corn plants (plant growth) can be measured. The polyester to be studied (0.01-10 g/kg) is added to a water-moistened

plant substrate and mixed in until homogeneously distributed. To determine the blank value, correspondingly moistened quartz sand is used. Then five precultivated corn seedlings were planted into each pretreated substrate and cultivated at ambient temperature for about 3 weeks, in the course of which the plants are watered with a compound fertilizer solution once per week. The plants are removed from the pots along with the roots, the roots are cleaned by washing and the plants are assessed for appearance and size. Then the shoot and root are separated from each other in each case and both parts are weighed to determine their fresh weight. The shoots and roots are subsequently dried to constant weight and their dry weights are determined. The final weights for the shoots and roots of 5 identically treated plants in each case are used to calculate the mean values for fresh and dry weights.

**d) Determining the stickiness and flowability**

The stickiness and flowability properties of the polyester are tested visually.

**B. Examples**

**Example 1**

**a) Preparation of unsaturated polyesters**

60.46 g 5-sulfoisophthalic acid dimethylester sodium salt, 63,67 g diethylene glycol and 0.06 g tetrabutylorthotitanate are reacted at a temperature of 200°C for about 2 h, whereby methanol is destilled off. After 2 h, 40.84 g of a mixture of maleic anhydride and diethyleneglycol in a molar ratio of 1:1.2 are added and the resulting mixture is further reacted at 200°C for about 1 h. Then, the temperature is raised to 220°C and vacuum is applied. The obtained polyester has a hydroxyl value of 80mgKOH/g.

**b) Preparation of cross-linked polyesters**

50 g of the unsaturated polyester according to 1a) is heat treated at a temperature of 200°C under vacuum for 24h to obtain a cross-linked polyester.

**Example 2**

**Variation of the molar ratio of units derived from groups of monomers A and B**

Cross-linked polyesters are prepared as described in Example 1. However, the molar ratios of the 5-sulfoisophthalic acid dimethylester sodium salt and the maleic anhydride are varied relative to each other, so that they are together still present in the same amount. Cross-linked polyesters with the following molar ratios are prepared: 5-sulfoisophthalic acid dimethylester sodium salt (A1) to the maleic anhydride (B1) = a) 10/90, b) 15/85, c) 20/80, d) 30/70, e) 40/60, f) 50/50, g) 60/40, h) 70/30, i) 80/20 and j) 90/10. It should be emphasized that the ratios according to Examples 2a), 2b) and 2c) are Comparative Examples because molar ratios of below 1:2.4 are not covered by the present invention. The remaining Examples 2d)-j) are Examples according to the invention, however.

The cross-linked polyesters are tested in terms of the water absorption capacity, the biodegradability, the plant growth, and the stickiness and flowability properties, in order to determine the influence of the molar ratio of the units derived from the groups of monomers A and B on the properties of the polyester.

The results are provided in the following table 1:

| Example | A1/B1 | Water absorption capacity* | Biodegradability** | Plant growth *** | Stickiness / Flowability **** |
|---|---|---|---|---|---|
| 2a) (comparative example) | 10/90 | Low | High | Medium | Bad |
| 2b) (comparative example) | 15/85 | Low | High | Medium | Bad |
| 2c) (comparative example) | 20/80 | High | High | High | Bad |
| 2d) | 30/70 | High | High | High | Medium |

(continued)

| Example | A1/B1 | Water absorption capacity* | Biodegradability** | Plant growth *** | Stickiness / Flowability **** |
|---|---|---|---|---|---|
| 2e) | 40/60 | High | High | High | Good |
| 2f) | 50/50 | High | High | High | Good |
| 2g) | 60/40 | High | High | High | Good |
| 2h) | 70/30 | High | High | High | Good |
| 2i) | 80/20 | Medium | High | High | Good |
| 2j) | 90/10 | Medium | High | High | Good |

* High water absorption capacity means at least 40g/g, medium water absorption capacity means at least 30g/g, and low water absorption capacity means below 30g/g at a temperature of from 20°C to 30°C for an absorption time of 1 day.
** High biodegradability means at least 45%, preferably at least 50% at a temperature of from 20°C to 30°C after 140 days.
*** High plant growth means at least 35% yield, preferably at least 40% yield in the cylinder test, medium plant growth means at least 30% yield in the cylinder test after 3 weeks at a temperature of from 20°C to 30°C.
**** Stickiness/flowabilty properties were visually determined.

The best results are obtained, if the units derived from the group of monomers A and the units derived from the group of monomers B1 are present in a molar ratio of from 70:30 to 30:70.

**Variation of the molar ratio of units derived from groups of monomers B1 and B2**

Cross-linked polyesters are prepared as described in Example 1. However, the molar ratios of the 5-sulfoisophthalic acid dimethylester sodium salt was kept for 50mol% and the molar ratios of maleic anhydride (B1) and succinic acid (B2) are varied relative to each other, so that they are together still present in the same amount. Cross-linked polyesters with the following molar ratios are prepared: 5-sulfoisophthalic acid dimethylester sodium salt (A1) to the maleic anhydride (B1) and succinic acid (B2)= 2aa) 50/40/10, 2bb) 50/30/20, 2cc) 50/20/30, 2dd) 50/10/40.
The cross-linked polyesters are tested in terms of the water absorption capacity, the biodegradability, the plant growth, and the stickiness and flowability properties, in order to determine the influence of the molar ratio of the units derived from the groups of monomers B1 and B2 on the properties of the polyester.
The results are provided in the following table 2:

| Example | A1/B1/B2 | Water absorption capacity* | Biodegradability** | Plant growth*** | Stickiness / Flowability**** |
|---|---|---|---|---|---|
| 2f) | 50/50/0 | High | High | High | Good |
| 2aa) | 50/40/10 | High | High | High | Good |
| 2bb) | 50/30/20 | High | High | High | Good |
| 2cc) | 50/20/30 | High | High | High | Good |
| 2dd) | 50/10/40 | High | High | High | Good |
| | | | | | |
| | | | | | |

**Example 3**

**Variation of the units derived from the group of monomers C**

Cross-linked polyesters are prepared as described in Example 1. However, the monomer C, i.e. diethylene glycol, is varied. Cross-linked polyesters are prepared, which comprise units derived from 5-sulfoisophthalic acid sodium salt monomers and the units derived from maleic anhydride monomers in a molar ratio of 1:1, and units derived from

ethylene glycol based monomers with n being 1, 2, 3 or 4 or units derived from a mixture of ethylene glycol based monomers with n being 2 and 3, wherein the molar ratio of the units derived from 5-sulfoisophthalic acid sodium salt monomers and the units derived from maleic anhydride monomers relative to the units derived from ethylene glycol based monomers with n being 1, 2, 3 or 4 or units derived from a mixture of ethylene glycol based monomers with n being 2 and 3 is 1:1. The water absorption capacity, the biodegradability and the plant growth have been tested, in order to assess the influence of the units derived from monomer C on the respective properties of the polyester.

The results for the water absorption capacity are provided in Figure 1. The best results are obtained with diethylene glycol.

The respective polyesters exhibit an extremely high water absorption capacity of more than 80g/g at a temperature of from 20°C to 30°C for an absorption time of 1 day.

With regard to the biodegradability, 50% biodegradation was observed after 140 days at a temperature of from 20°C to 30°C in each case.

With regard to the plant growth, 40% yield is obtained in the cylinder test in each case.

**Field test first year in Utrera, Spain (2013)**

Cross linked hydrogel of Example 1 was produced again to obtain ca. 1 kg of hydrogel. This hydrogel was used for field test with tomatos. The hydrogel was used with the average amount of 20kg/ha. The yield/harvest of tomato fruits with and without hydrogel were compared.

Without Hydrogel: 100%
With Hydrogel: 120%

**Field test second year in Utrera, Spain (2014)**

Cross linked hydrogel of Example 1 was produced again to obtain ca. 1 kg of hydrogel. This hydrogel was used for field test with tomatos. The hydrogel was used with the average amount of 10kg/ha. The yield/harvest of tomato fruits with and without hydrogel were compared.

Without Hydrogel: ripe tomato: 100%, unripe tomato: 100%
With Hydrogel: ripe tomato: 115%, unripe tomato: 112%

## Claims

1. A polyester comprising units derived from groups of monomers A, B and C, wherein

   (a) the group of monomers A consists of

   (a1) monomers A1, or
   (a2) monomers A1 and monomers A2, with monomers A1 and monomers A2 being present in a molar ratio of at least 31:69,

   wherein the monomers A1 are selected from the group consisting of aromatic sulfonated dicarboxylic acid based monomers of the following general formulae (I), (II), (III) and (IV)

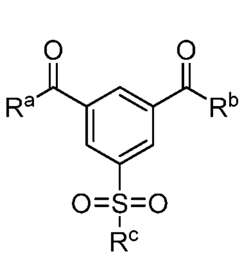
I

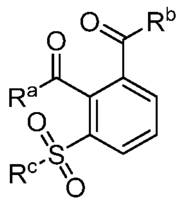
II

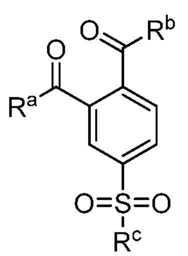
III

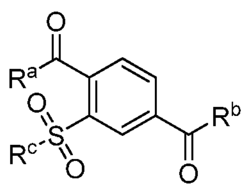
IV

   wherein

$R^c$ represents -OH, or -OR with R being -($C_1$-$C_6$)alkyl, or $-O^-M^+$ with $M^+$ being $NH_4^+$, $Li^+$, $Na^+$ or $K^+$, or $-O^-(½M^{2+})$ with $M^{2+}$ being $Mg^{2+}$ or $Ca^{2+}$; and

(i) $R^a$ and $R^b$ are independently selected from -halo, -OH, -$OR^1$, -$NH_2$ and - $N(R^1)_2$ with $R^1$ being -($C_1$-$C_6$)alkyl or -C(=O)($C_1$-$C_4$)alkyl, or
(ii) $R^a$ -$R^b$ together represent an oxygen bridge -O-,

and mixtures thereof, and
wherein the monomers A2 are selected from the group consisting of non-sulfonated aromatic dicarboxylic acid based monomers of the following general formulae (V), (VI) and (VII)

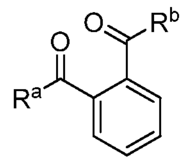
V
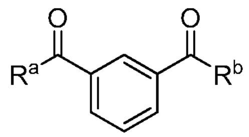
VI
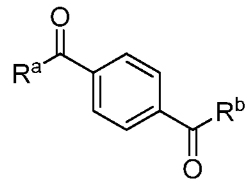
VII

wherein

(i) $R^a$ and $R^b$ are independently selected from -halo, -OH, -$OR^1$, -$NH_2$ and - $N(R^1)_2$ with $R^1$ being -($C_1$-$C_6$)alkyl or -C(=O)($C_1$-$C_4$)alkyl, or
(ii) $R^a$ -$R^b$ together represent an oxygen bridge -O-,

and mixtures thereof,
(b) the group of monomers B consists of

(b1) monomers B1, or
(b2) monomers B1 and monomers B2, with monomers B1 and monomers B2 being present in a molar ratio of at least 1:9,

wherein the monomers B1 are selected from the group consisting of unsaturated dicarboxylic acid based monomers of the following general formula (VIII)

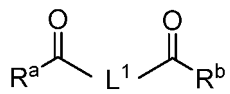
VIII

wherein
$L^1$ represents a linear or branched $C_2$-$C_8$-alkylene chain, and

(i) $R^a$ and $R^b$ are independently selected from -halo, -OH, -$OR^1$, -$NH_2$ and - $N(R^1)_2$ with $R^1$ being -($C_1$-$C_6$)alkyl or -C(=O)($C_1$-$C_4$)alkyl, or
(ii) $R^a$ -$R^b$ together represent an oxygen bridge -O-,

and mixtures thereof, and
wherein the monomers B2 are selected from the group consisting of saturated dicarboxylic acid based monomers of the following general formula (IX)

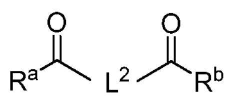
IX

wherein
$L^2$ represents a linear or branched $C_1$-$C_{22}$-alkyl chain, and

(i) $R^a$ and $R^b$ are independently selected from -halo, -OH, -$OR^1$, -$NH_2$ and - $N(R^1)_2$ with $R^1$ being -($C_1$-$C_6$)alkyl or -C(=O)($C_1$-$C_4$)alkyl, or
(ii) $R^a$ -$R^b$ together represent an oxygen bridge -O-,

and mixtures thereof,
(c) the group of monomers C consists of

(c1) monomers C1,
(c2) monomers C2, or
(c3) monomers C1 and C2,

wherein the monomers C1 are selected from the group consisting of ethylene glycol based monomers of the following general formula (X)

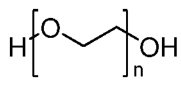

(X)

wherein n is an integer of from 1 to 150, and mixtures thereof, and
wherein the monomers C2 are selected from the group consisting of propylene glycol based monomers of the following general formula (XI)

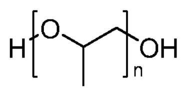

(XI)

wherein n is 1, 2, 3, 4, 5 or 6,
and mixtures thereof;
wherein the molar ratio of the units derived from the group of monomers A to the units derived from the group of monomers B is from 9:1 to 1:2.4 in the polyester, and
wherein the molar ratio of the units derived from the groups of monomers A and B to the units derived from the group of monomers C is from 1.3:1 to 1:1.3 in the polyester.

**2.** The polyester according to claim 1, wherein

(a) the group of monomers A consists of

(a1) monomers A1, or
(a2) monomers A1 and monomers A2, with monomers A1 and monomers A2 being present in a molar ratio of at least 31:69,
and the group of monomers B consists of
(b1) monomers B1, or
(b2) monomers B1 and monomers B2, with monomers B1 and monomers B2 being present in a molar ratio of at least 4:1.

**3.** The polyester according to claim 1, wherein

(a) the group of monomers A consists of

(a1) monomers A1, or
(a2) monomers A1 and monomers A2, with monomers A1 and monomers A2 being present in a molar ratio of at least 4:1,

and the group of monomers B consists of
(b1) monomers B1, or
(b2) monomers B1 and monomers B2, with monomers B1 and monomers B2 being present in a molar ratio of at least 1:9.

**4.** The polyester according to claim 1, wherein

(a) the group of monomers A consists of

(a1) monomers A1, or
(a2) monomers A1 and monomers A2, with monomers A1 and monomers A2 being present in a molar ratio of at least 4:1,
and the group of monomers B consists of
(b1) monomers B1, or
(b2) monomers B1 and monomers B2, with monomers B1 and monomers B2 being present in a molar ratio of at least 4:1.

**5.** The polyester according to anyone of the claims 1 to 4, wherein the units derived from the groups of monomers A, B and C are together present in an amount of at least 95 wt.-% based on the total weight of the polyester.

**6.** The polyester according to anyone of the claims 1 to 5,

(a) wherein the units derived from monomers A1 are present in an amount of at least 30 wt.-% based on the total weight of the polyester, and/or
(b) wherein the units derived from monomers B1 are present in an amount of at least 6 wt.-% based on the total weight of the polyester.

**7.** The polyester according to any one of claims 1 to 6,

(a1) wherein the monomers A1 are selected from the group consisting of 5-sulfoisophthalic acid based monomers, alkali and alkaline earth metal salts thereof and mixtures thereof; and/or
(a2) wherein the monomers A2 are selected from the group consisting of therephthalic acid based monomers, isophthalic acid based monomers, phthalic acid based monomers and mixtures thereof;
and/or
(b1) wherein the monomers B1 are selected from the group consisting of maleic acid based monomers, fumaric acid based monomers, glutaconic acid based monomers, itaconic acid based monomers and mixtures thereof;
and/or
(b2) wherein the monomers B2 are selected from the group consisting of malonic acid based monomers, succinic acid based monomers, glutaric acid based monomers, adipic acid based monomers, sebacic acid based monomers and mixtures thereof,
and/or;
(c1) wherein the monomers C1 are selected from the group consisting of ethyleneglycol monomers, diethyleneglycol monomers, triethyleneglycol monomers and mixtures thereof;
and/or
(c2) wherein the monomers C2 are selected from the group consisting of propyleneglycol monomers, dipropyleneglycol monomers and mixtures thereof, and are preferably dipropyleneglycol monomers.

**8.** The polyester according to any one of claims 1 to 7,

(a) wherein the group of monomers A consists of 5-sulfoisophthalic acid sodium salt monomers A1; and
(b) wherein the group of monomers B consist of maleic anhydride monomers B1; and
(c) wherein the group of monomers C consists of diethyleneglycol monomers C1; and/or

wherein the molar ratio of the units derived from the group of monomers A to the units derived from the group of monomers B is preferably 9:1 to 1:2.4, and
wherein the molar ratio of the units derived from the groups of monomers A and B to the units derived from the group of monomers C is preferably from 1.1:1 to 1:1.1.

**9.** The polyester according to any one of claims 1 to 8 being cross-linked.

**10.** The polyester according to claim 9 obtainable by thermal cross-linking at a temperature of from 150°C to 250°C for at least 20 h, optionally in the presence of a peroxide.

**11.** The polyester according to any one of claims 9 to 10, wherein the polyester is capable of absorbing water or an aqueous solution in an amount of from 30 g to 200 g per gram of the cross-linked polyester, at a temperature of from 20°C to 30°C for an absorption time of 1 day.

**12.** A composition comprising as compounds

(a) the polyester according to any one of the claims 9 to 11 and
(b) saw dust or flax dust or a combination thereof,

wherein the two compounds are preferably together present in an amount of at least 90 wt.-%.

**13.** A soil treatment product comprising as compounds

(a) the polyester according to any one of claims 9-11 or the composition of claim 12 and
(b) at least one additional compound selected from the group consisting of fillers, nutrients, fertilizers, pesticides and combinations thereof,

wherein the compounds are preferably together present in an amount of at least 50%, preferably at least 75%, more preferably at least 90% based on the total weight of the soil treatment product.

**14.** Use of the polyester according to any one of claims 9-11 or the composition of claim 12 for agricultural applications preferably for improving the physiological properties of soils, more preferably for absorbing and storing humidity in soils, and/or for improving the soil structure by loosening the soil, wherein preferably plant growth is accelerated in that the weight of a plant in treated soil is increased by at least 20%, preferably by at least 30%, most preferably by at least 40% compared to the weight of a plant in untreated soil, wherein the percentage value corresponds to the weight increase of the dry weight of the plant in treated soil after 3 weeks cultivation at a temperature of from 20°C to 30°C compared to the plant in untreated soil.

## Patentansprüche

**1.** Polyester, das Einheiten umfasst, die von Gruppen von Monomeren A, B und C stammen, wobei

(a) die Gruppe der Monomere A aus Folgendem besteht

(a1) Monomeren A1 oder
(a2) Monomeren A1 und Monomeren A2, wobei die Monomere A1 und die Monomere A2 in einem Molverhältnis von mindestens 31:69 vorliegen,

wobei die Monomere A1 aus der Gruppe ausgewählt sind, die aus auf aromatischen sulfonierten Dicarbonsäuren basierenden Monomeren der folgenden allgemeinen Formeln (I), (II), (III) und (IV) besteht

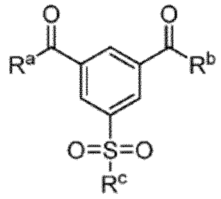
I
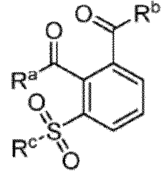
II
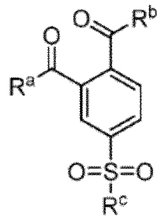
III
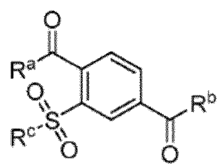
IV

,

worin
$R^c$ für -OH oder -OR steht, wobei R für -($C_1$-$C_6$) Alkyl oder $-O^-M^+$, wobei $M^+$ für $NH_4^+$, $Li^+$, $Na^+$ oder $K^+$ steht, oder $-O^-(1/2M^{2+})$ steht, wobei $M^{2+}$ für $Mg^{2+}$ oder $Ca^{2+}$ steht; und

(i) $R^a$ und $R^b$ unabhängig aus -Halogen, -OH, $-OR^1$, $-NH_2$ und $-N(R^1)_2$ ausgewählt sind, wobei $R^1$ -($C_1$-$C_6$)Alkyl oder -C(=O) ($C_1$-$C_4$)Alkyl ist, oder
(ii) $R^a$ -$R^b$ zusammen eine Sauerstoffbrücke -0-darstellen, und Gemischen davon, und

wobei die Monomere A2 aus der Gruppe ausgewählt sind, die aus auf nicht-sulfonierten aromatischen Dicarbonsäuren basierenden Monomeren der folgenden allgemeinen Formeln (V), (VI) und (VII) besteht

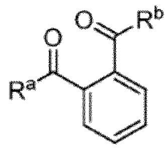
V
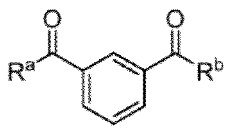
VI
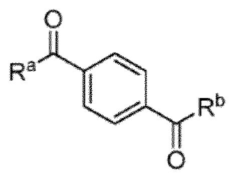
VII
,

worin

(i) $R^a$ und $R^b$ unabhängig aus -Halogen, -OH, $-OR^1$, $-NH_2$ und $-N(R^1)_2$ ausgewählt sind, wobei $R^1$ -($C_1$-$C_6$)Alkyl oder -C(=O) ($C_1$-$C_4$) Alkyl ist, oder
(ii) $R^a$ -$R^b$ zusammen eine Sauerstoffbrücke -0-darstellen, und Gemischen davon,

(b) die Gruppe der Monomere B aus Folgendem besteht

(b1) Monomeren B1 oder
(b2) Monomeren B1 und Monomeren B2, wobei die Monomere B1 und die Monomere B2 in einem Molverhältnis von mindestens 1:9 vorhanden sind,

wobei die Monomere B1 aus der Gruppe ausgewählt sind, die aus auf ungesättigten Dicarbonsäuren basierenden Monomeren der folgenden allgemeinen Formel (VIII) besteht,

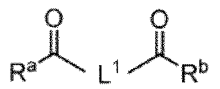
VIII
,

worin
$L^1$ eine gerade oder verzweigte $C_2$-$C_8$-Alkylenkette darstellt und

(i) $R^a$ und $R^b$ unabhängig aus -Halogen, -OH, $-OR^1$, $-NH_2$ und $-N(R^1)_2$ ausgewählt sind, wobei $R^1$ -($C_1$-$C_6$)Alkyl oder -C(=O) ($C_1$-$C_4$)Alkyl ist, oder
(ii) $R^a$ -$R^b$ zusammen eine Sauerstoffbrücke -0-darstellen, und Gemischen davon, und

wobei die Monomere B2 aus der Gruppe ausgewählt sind, die aus auf gesättigten Dicarbonsäuren basierenden Monomeren der folgenden allgemeinen Formel (IX) besteht

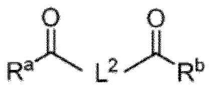
IX
,

worin

$L^2$ eine gerade oder verzweigte $C_1$-$C_{22}$-Alkylkette darstellt und

(i) $R^a$ und $R^b$ unabhängig aus -Halogen, -OH, -$OR^1$, -$NH_2$ und -$N(R^1)_2$ ausgewählt sind, wobei $R^1$ -($C_1$-$C_6$)Alkyl oder -C(=O) ($C_1$-$C_4$) Alkyl ist, oder
(ii) $R^a$ -$R^b$ zusammen eine Sauerstoffbrücke -0-darstellen, und Gemischen davon, und

(c) die Gruppe der Monomere C aus Folgendem besteht

(c1) Monomeren C1,
(c2) Monomeren C2 oder
(c3) Monomeren C1 und C2,

wobei die Monomere C1 aus der Gruppe ausgewählt sind, die aus auf Ethylenglykol basierenden Monomeren der folgenden allgemeinen Formel (X) besteht

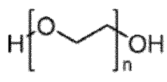

(X) ,

wobei n eine ganze Zahl von 1 bis 150 ist, und Gemischen davon, und
wobei die Monomere C2 aus der Gruppe ausgewählt sind, die aus auf Propylenglykol basierenden Monomeren der folgenden allgemeinen Formel (XI) besteht

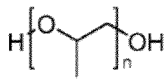

(XI) ,

worin n 1, 2, 3, 4, 5 oder 6 ist, und Gemischen davon;
wobei das Molverhältnis der Einheiten, die von der Gruppe der Monomere A stammen, zu den Einheiten, die von der Gruppe der Monomere B stammen, von 9:1 bis 1:2,4 im Polyester beträgt, und
wobei das Molverhältnis der Einheiten, die von den Gruppen der Monomere A und B stammen, zu den Einheiten, die von der Gruppe der Monomere C stammen, von 1,3:1 bis 1:1,3 im Polyester beträgt.

**2.** Polyester nach Anspruch 1, wobei

(a) die Gruppe der Monomere A aus Folgendem besteht

(a1) Monomeren A1 oder
(a2) Monomeren A1 und Monomeren A2, wobei die Monomere A1 und die Monomere A2 in einem Molverhältnis von mindestens 31:69 vorliegen,
und die Gruppe der Monomere B aus Folgendem besteht (b1) Monomeren B1 oder
(b2) Monomeren B1 und Monomeren B2, wobei die Monomere B1 und die Monomere B2 in einem Molverhältnis von mindestens 4:1 vorliegen.

**3.** Polyester nach Anspruch 1, wobei

(a) die Gruppe der Monomere A aus Folgendem besteht

(a1) Monomeren A1 oder
(a2) Monomeren A1 und Monomeren A2, wobei die Monomere A1 und die Monomere A2 in einem Molverhältnis von mindestens 4:1 vorliegen,
und die Gruppe der Monomere B aus Folgendem besteht
(b1) Monomeren B1 oder
(b2) Monomeren B1 und Monomeren B2, wobei die Monomere B1 und die Monomere B2 in einem Molverhältnis von mindestens 1:9 vorliegen.

**4.** Polyester nach Anspruch 1, wobei

(a) die Gruppe der Monomere A aus Folgendem besteht

(a1) Monomeren A1 oder
(a2) Monomeren A1 und Monomeren A2, wobei die Monomere A1 und die Monomere A2 in einem Molverhältnis von mindestens 4:1 vorliegen,
und die Gruppe der Monomere B aus Folgendem besteht
(b1) Monomeren B1 oder
(b2) Monomeren B1 und Monomeren B2, wobei die Monomere B1 und die Monomere B2 in einem Molverhältnis von mindestens 4:1 vorliegen.

**5.** Polyester nach einem der Ansprüche 1 bis 4, wobei die von den Gruppen von Monomeren A, B und C stammenden Einheiten zusammen in einer Menge von mindestens 95 Gew.-%, bezogen auf das Gesamtgewicht des Polyesters, vorliegen.

**6.** Polyester nach einem der Ansprüche 1 bis 5,

(a) wobei die von den Monomeren A1 stammenden Einheiten in einer Menge von mindestens 30 Gew.-%, bezogen auf das Gesamtgewicht des Polyesters, vorliegen und/oder
(b) wobei die von den Monomeren B1 stammenden Einheiten in einer Menge von mindestens 6 Gew.-%, bezogen auf das Gesamtgewicht des Polyesters, vorliegen.

**7.** Polyester nach einem der Ansprüche 1 bis 6,

(a1) wobei die Monomere A1 aus der Gruppe ausgewählt sind, die aus auf 5-Sulfoisophthalsäure basierenden Monomeren, Alkali- und Erdalkalimetallsalzen davon und Gemischen davon besteht;
und/oder
(a2) wobei die Monomere A2 aus der Gruppe ausgewählt sind, die aus auf Terephthalsäure basierenden Monomeren, auf Isophthalsäure basierenden Monomeren, auf Phthalsäure basierenden Monomeren und Gemischen davon besteht;
und/oder
(b1) wobei die Monomere B1 aus der Gruppe ausgewählt sind, die aus auf Maleinsäure basierenden Monomeren, auf Fumarsäure basierenden Monomeren, auf Glutaconsäure basierenden Monomeren, auf Itaconsäure basierenden Monomeren und Gemischen davon besteht;
und/oder
(b2) wobei die Monomere B2 aus der Gruppe ausgewählt sind, die aus auf Malonsäure basierenden Monomeren, auf Bernsteinsäure basierenden Monomeren, auf Glutarsäure basierenden Monomeren, auf Adipinsäure basierenden Monomeren, auf Sebacinsäure basierenden Monomeren und Gemischen davon besteht;
und/oder
(c1) wobei die Monomere C1 aus der Gruppe ausgewählt sind, die aus Ethylenglykol-Monomeren, Diethylenglykol-Monomeren, Triethylenglykol-Monomeren und Gemischen davon besteht;
und/oder
(c2) wobei die Monomere C2 aus der Gruppe ausgewählt sind, die aus Propylenglykol-Monomeren, Dipropylenglykol-Monomeren und Gemischen davon besteht, und vorzugsweise Dipropylenglykol-Monomere sind.

**8.** Polyester nach einem der Ansprüche 1 bis 7,

(a) wobei die Gruppe der Monomere A aus 5-Sulfoisophthalsäure-Natriumsalz-Monomeren A1 besteht und
(b) wobei die Gruppe der Monomere B aus Maleinsäureanhydrid-Monomeren B1 besteht und
(c) wobei die Gruppe der Monomere C aus Diethylenglykol-Monomeren C1 besteht

und/oder
wobei das Molverhältnis der Einheiten, die von der Gruppe der Monomere A stammen, zu den Einheiten, die von der Gruppe der Monomere B stammen, vorzugsweise 9:1 bis 1:2,4 beträgt und
wobei das Molverhältnis der Einheiten, die von den Gruppen der Monomere A und B stammen, zu den Einheiten, die von der Gruppe der Monomere C stammen, vorzugsweise von 1,1:1 bis 1:1,1 beträgt.

**9.** Polyester nach einem der Ansprüche 1 bis 8, das vernetzt ist.

**10.** Polyester nach Anspruch 9, das durch thermische Vernetzung bei einer Temperatur von 150°C bis 250°C für mindestens 20 Std., gegebenenfalls in Gegenwart eines Peroxids, erhältlich ist.

**11.** Polyester nach einem der Ansprüche 9 bis 10, wobei das Polyester fähig ist, Wasser oder eine wässrige Lösung in einer Menge von 30 g bis 200 g pro Gramm des vernetzten Polyesters bei einer Temperatur von 20°C bis 30°C während einer Absorptionszeit von 1 Tag zu absorbieren.

**12.** Zusammensetzung, die als Verbindungen Folgendes umfasst

(a) das Polyester nach einem der Ansprüche 9 bis 11 und
(b) Sägemehl oder Flachsstaub oder eine Kombination davon,

wobei die beiden Verbindungen vorzugsweise zusammen in einer Menge von mindestens 90 Gew.-% vorhanden sind.

**13.** Bodenbehandlungsprodukt, das als Verbindungen Folgendes umfasst

(a) das Polyester nach einem der Ansprüche 9-11 oder die Zusammensetzung nach Anspruch 12 und
(b) mindestens eine zusätzliche Verbindung, die aus der aus Füllstoffen, Nährstoffen, Düngemitteln, Pestiziden und Kombinationen davon bestehenden Gruppe ausgewählt ist,

wobei die Verbindungen vorzugsweise zusammen in einer Menge von mindestens 50%, vorzugsweise mindestens 75%, stärker bevorzugt mindestens 90%, bezogen auf das Gesamtgewicht des Bodenbehandlungsprodukts, vorhanden sind.

**14.** Verwendung des Polyesters nach einem der Ansprüche 9-11 oder der Zusammensetzung nach Anspruch 12 für landwirtschaftliche Anwendungen, vorzugsweise zur Verbesserung der physiologischen Eigenschaften von Böden, stärker bevorzugt zum Absorbieren und Speichern von Feuchtigkeit in Böden und/oder zur Verbesserung der Bodenstruktur durch Lockern des Bodens, wobei vorzugsweise das Pflanzenwachstum dahingehend beschleunigt wird, dass das Gewicht einer Pflanze in behandeltem Boden um mindestens 20%, vorzugsweise um mindestens 30%, am stärksten bevorzugt um mindestens 40% im Vergleich zu dem Gewicht einer Pflanze in unbehandeltem Boden erhöht wird, wobei der Prozentwert der Gewichtszunahme des Trockengewichts der Pflanze in behandeltem Boden nach 3-wöchiger Kultivierung bei einer Temperatur von 20°C bis 30°C im Vergleich zu der Pflanze in unbehandeltem Boden entspricht.

## Revendications

**1.** Polyester comprenant des motifs dérivés de groupes de monomères A, B et C,
où

(a) le groupe de monomères A est constitué par

(a1) les monomères A1, ou
(a2) les monomères A1 et les monomères A2, les monomères A1 et les monomères A2 étant présents dans un rapport molaire d'au moins 31:69,

où les monomères A1 sont choisis dans le groupe constitué par les monomères basés sur acide dicarboxylique sulfoné aromatique répondant aux formules générales (I), (II), (III) et (IV) suivantes

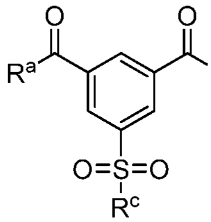 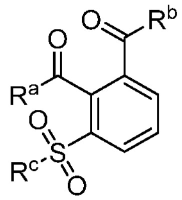 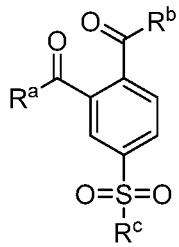 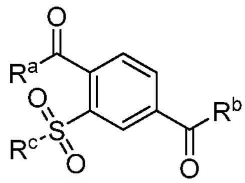

I II III IV

où

$R^c$ représente -OH ou -OR, R représentant un groupement - (alkyle en $C_1$-$C_6$), ou $-O^-M^+$, $M^+$ représentant $NH_4^+$, $Li^+$, $Na^+$ ou $K^+$, ou encore $-O^-(½M^{2+})$, $M^{2+}$ représentant $Mg^{2+}$ ou $Ca^{2+}$ ; et

(i) chacun des radicaux $R^a$ et $R^b$ est indépendamment choisi parmi les groupements -halogéno, -OH, $-OR^1$, $-NH_2$ et $-N(R^1)_2$, $R^1$ représentant un groupement - (alkyle en $C_1$-$C_6$) ou -C(=O) (alkyle en $C_1$-$C_4$), ou
(ii) $R^a$-$R^b$ forment ensemble un pont oxygène -0-,

et leurs mélanges, et
où les monomères A2 sont choisis dans le groupe constitué par les monomères basés sur acide dicarboxylique aromatique non sulfoné répondant aux formules générales (V), (VI) et (VII) suivantes

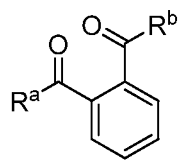 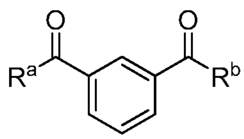 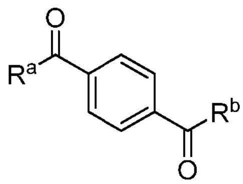

V VI VII

où

(i) chacun des radicaux $R^a$ et $R^b$ est indépendamment choisi parmi les groupements -halogéno, -OH, $-OR^1$, $-NH_2$ et $-N(R^1)_2$, $R^1$ représentant un groupement - (alkyle en $C_1$-$C_6$) ou -C(=O) (alkyle en $C_1$-$C_4$), ou
(ii) $R^a$-$R^b$ forment ensemble un pont oxygène -0-,

et leurs mélanges,
(b) le groupe de monomères B est constitué par

(b1) les monomères B1, ou
(b2) les monomères B1 et les monomères B2, les monomères B1 et les monomères B2 étant présents dans un rapport molaire d'au moins 1:9,

où les monomères B1 sont choisis dans le groupe constitué par les monomères basés sur acide dicarboxylique insaturé répondant à la formule générale (VIII) suivante

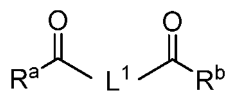

VIII

où
$L^1$ représente une chaîne alkylène en $C_2$-$C_8$ linéaire ou ramifiée, et

(i) chacun des radicaux $R^a$ et $R^b$ est indépendamment choisi parmi les groupements -halogéno, -OH, $-OR^1$, $-NH_2$ et $-N(R^1)_2$, $R^1$ représentant un groupement - (alkyle en $C_1$-$C_6$) ou -C(=O) (alkyle en $C_1$-$C_4$), ou
(ii) $R^a$-$R^b$ forment ensemble un pont oxygène -O-,

et leurs mélanges, et
où les monomères B2 sont choisis dans le groupe constitué par les monomères basés sur acide dicarboxylique saturé répondant à la formule générale (IX) suivante

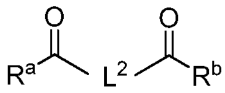

IX

où
$L^2$ représente une chaîne alkyle en $C_1$-$C_{22}$ linéaire ou ramifiée, et

(i) chacun des radicaux $R^a$ et $R^b$ est indépendamment choisi parmi les groupements -halogéno, -OH, -$OR^1$, -$NH_2$ et -$N(R^1)_2$, $R^1$ représentant un groupement - (alkyle en $C_1$-$C_6$) ou -C(=O) (alkyle en $C_1$-$C_4$), ou
(ii) $R^a$-$R^b$ forment ensemble un pont oxygène -0-,

et leurs mélanges,
(c) le groupe de monomères C est constitué par

(c1) les monomères C1,
(c2) les monomères C2, ou
(c3) les monomères C1 et C2,

où les monomères C1 sont choisis dans le groupe constitué par les monomères basés sur éthylène glycol répondant à la formule générale (X) suivante

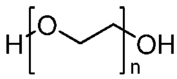

(X)

où n représente un entier compris entre 1 et 150,
et leurs mélanges, et
où les monomères C2 sont choisis dans le groupe constitué par les monomères basés sur propylène glycol répondant à la formule générale (XI) suivante

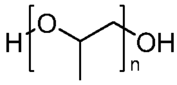

(XI)

où n est égal à 1, 2, 3, 4, 5 ou 6 ;
et leurs mélanges ;
où le rapport molaire des motifs dérivés du groupe de monomères A sur les motifs dérivés du groupe de monomères B est compris entre 9:1 et 1:2,4 dans le polyester, et
où le rapport molaire des motifs dérivés des groupes de monomères A et B sur les motifs dérivés du groupe de monomères C est compris entre 1,3:1 et 1:1,3 dans le polyester.

**2.** Polyester selon la revendication 1, où

(a) le groupe de monomères A est constitué par

(a1) les monomères A1, ou
(a2) les monomères A1 et les monomères A2, les monomères A1 et les monomères A2 étant présents dans un rapport molaire d'au moins 31:69,
et le groupe de monomères B est constitué par (b1) les monomères B1, ou

(b2) les monomères B1 et les monomères B2, les monomères B1 et les monomères B2 étant présents dans un rapport molaire d'au moins 4:1.

**3.** Polyester selon la revendication 1, où

(a) le groupe de monomères A est constitué par

(a1) les monomères A1, ou
(a2) les monomères A1 et les monomères A2, les monomères A1 et les monomères A2 étant présents dans un rapport molaire d'au moins 4:1,
et le groupe de monomères B est constitué par
(b1) les monomères B1, ou
(b2) les monomères B1 et les monomères B2, les monomères B1 et les monomères B2 étant présents dans un rapport molaire d'au moins 1:9.

**4.** Polyester selon la revendication 1, où

(a) le groupe de monomères A est constitué par

(a1) les monomères A1, ou
(a2) les monomères A1 et les monomères A2, les monomères A1 et les monomères A2 étant présents dans un rapport molaire d'au moins 4:1,
et le groupe de monomères B est constitué par
(b1) les monomères B1, ou
(b2) les monomères B1 et les monomères B2, les monomères B1 et les monomères B2 étant présents dans un rapport molaire d'au moins 4:1.

**5.** Polyester selon l'une quelconque des revendications 1 à 4, où les motifs dérivés des groupes de monomères A, B et C sont présents ensemble à une teneur d'au moins 95 % en masse par rapport à la masse totale du polyester.

**6.** Polyester selon l'une quelconque des revendications 1 à 5,

(a) où les motifs dérivés des monomères A1 sont présents à une teneur d'au moins 30 % en masse par rapport à la masse totale du polyester, et/ou
(b) où les motifs dérivés des monomères B1 sont présents à une teneur d'au moins 6 % en masse par rapport à la masse totale du polyester.

**7.** Polyester selon l'une quelconque des revendications 1 à 6,

(a1) où les monomères A1 sont choisis dans le groupe constitué par les monomères bases sur acide 5-sulfo-isophtalique, leurs sels de métaux alcalins et alcalino-terreux et leurs mélanges ; et/ou
(a2) où les monomères A2 sont choisis dans le groupe constitué par les monomères basés sur acide téréphtalique, les monomères basés sur acide isophtalique, les monomères basés sur acide phtalique et leurs mélanges ; et/ou
(b1) où les monomères B1 sont choisis dans le groupe constitué par les monomères basés sur acide maléique, les monomères basés sur acide fumarique, les monomères basés sur acide glutaconique, les monomères basés sur acide itaconique et leurs mélanges ; et/ou
(b2) où les monomères B2 sont choisis dans le groupe constitué par les monomères basés sur acide malonique, les monomères basés sur acide succinique, les monomères basés sur acide glutarique, les monomères basés sur acide adipique, les monomères basés sur acide sébacique et leurs mélanges, et/ou ;
(c1) où les monomères C1 sont choisis dans le groupe constitué par les monomères éthylène glycol, les monomères diéthylène glycol, les monomères triéthylène glycol et leurs mélanges ; et/ou
(c2) où les monomères C2 sont choisis dans le groupe constitué par les monomères propylène glycol, les monomères dipropylène glycol et leurs mélanges, et sont préférentiellement des monomères dipropylène glycol.

**8.** Polyester selon l'une quelconque des revendications 1 à 7,

(a) où le groupe de monomères A est constitué des monomères de sels de sodium d'acide 5-sulfo-isophtalique

A1 ; et
(b) où le groupe de monomères B est constitué des monomères d'anhydride maléique B1 ; et
(c) où le groupe de monomères C est constitué des monomères de diéthylène glycol C1 ; et/ou

où le rapport molaire des motifs dérivés du groupe de monomères A sur les motifs dérivés du groupe de monomères B est préférentiellement compris entre 9:1 et 1:2,4, et
où le rapport molaire des motifs dérivés des groupes de monomères A et B sur les motifs dérivés du groupe de monomères C est préférentiellement compris entre 1,1:1 et 1:1,1.

**9.** Polyester selon l'une quelconque des revendications 1 à 8, qui est réticulé.

**10.** Polyester selon la revendication 9, qui peut être obtenu par réticulation thermique à une température comprise entre 150 °C et 250 °C pendant au moins 20 heures, éventuellement en présence d'un peroxyde.

**11.** Polyester selon l'une quelconque des revendications 9 à 10, où le polyester est capable d'absorber l'eau ou une solution aqueuse à une teneur comprise entre 30 g et 200 g par gramme du polyester réticulé, à une température comprise entre 20 °C et 30 °C pendant une durée d'absorption de 1 jour.

**12.** Composition comprenant au titre de composés

(a) le polyester selon l'une quelconque des revendications 9 à 11, et
(b) de la sciure ou de la poussière de lin ou l'une de leurs combinaisons,

où les deux composés sont préférentiellement présents ensemble à une teneur d'au moins 90 % en masse.

**13.** Produit de traitement du sol comprenant au titre de composés

(a) le polyester selon l'une quelconque des revendications 9 à 11 ou la composition selon la revendication 12 et
(b) au moins un composé supplémentaire choisi dans le groupe constitué par les charges, les nutriments, les engrais, les pesticides et leurs combinaisons,

où les composés sont préférentiellement présents ensemble à une teneur d'au moins 50 % en masse, préférentiellement d'au moins 75 % en masse, et préférentiellement d'au moins 90 % en masse, par rapport à la masse totale du produit de traitement du sol.

**14.** Utilisation du polyester selon l'une quelconque des revendications 9 à 11 ou de la composition selon la revendication 12 dans des applications agricoles, préférentiellement dans l'amélioration des propriétés physiologiques des sols, et préférentiellement dans l'absorption et le stockage de l'humidité des sols, et/ou dans l'amélioration de la structure des sols en ameublissant le sol, où, préférentiellement, la croissance des plantes est accélérée en ce que le poids d'une plante dans le sol traité est supérieur d'au moins 20 %, préférentiellement d'au moins 30 %, le plus préférentiellement d'au moins 40 %, à la masse d'une plante dans le sol non traité, où la valeur en pourcentage correspond à l'augmentation de poids sec de la plante dans le sol traité après 3 semaines de culture à une température comprise entre 20 °C et 30 °C par rapport à la plante dans le sol non traité.

Figures

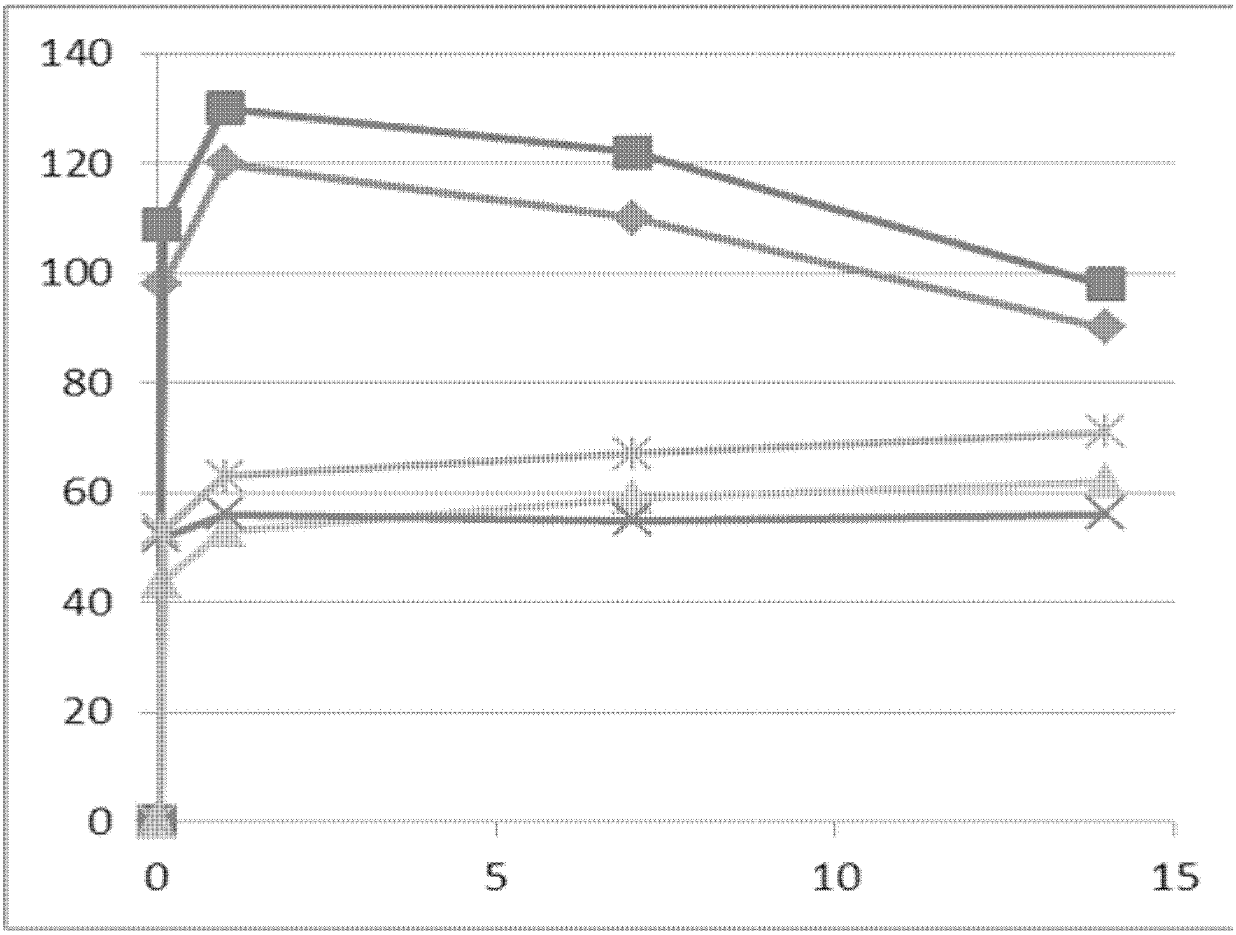

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008008288 A2
- EP 0558788 A1
- WO 2006078456 A2
- EP 0792310 B1
- WO 9720899 A1

### Non-patent literature cited in the description


- **FREDERIC L. BUCHHOLZ ; ANDREW T. GRAHAM.** Modern Superabsobent Polymer Technology. J. Wiley & Sons, New York, USA / Wiley VCH, Weinheim, Germany, 1997
- **TEMENOFF et al.** *OPF Hydrogel Material Properties,* 2002, 429-437
- **TONG et al.** *Polymer Engineering and Science,* 1985, vol. 25, 54-56